# EUROPEAN PATENT APPLICATION

(11) **EP 2 146 261 A1**
(43) Date of publication of application: **20.01.2010**
(21) Application number: 08739655.2
(22) Date of filing: 02.04.2008
(51) Int. Cl.: G05B 23/02, G06Q 50/00

(54) **GROUP MANAGING DEVICE AND GROUP MANAGING PROGRAM**

(30) Priority: 27.04.2007 JP 2007118434; 19.03.2008 JP 2008071750
(71) Applicant: Daikin Industries, Ltd., Osaka 530-8323 (JP)
(72) Inventor: KANBARA, Toshihiro, Kusatsu-shi Shiga 525-8526 (JP); MURAKAMI, Yoshihiko, Kusatsu-shi Shiga 525-8526 (JP); OGURA, Takanori, Kusatsu-shi Shiga 525-8526 (JP); KIMURA, Fumitaka, Kusatsu-shi Shiga 525-8526 (JP)
(74) Representative: Goddar, Heinz J.
(86) International application number: PCT/JP2008/056544
(87) International publication number: WO 2008/136233

(57) **Abstract**

This is to provide a group management apparatus and a group management program capable of ensuring simultaneity of information each time in acquiring information relating to an operating condition of installation equipment from the plurality of management apparatus.
A group management apparatus (30) of the present invention is connected to first to nth management apparatus (20a1 to 20an) that collectively manage a plurality of installation equipment (10c1 to 10cn) belonging to first to nth installation equipment groups (15b1 to 15bn), and collectively manage the first to nth installation equipment groups. The group management apparatus includes a plurality of interrogation processors (34a1, 34an, ...) that repeatedly carry out interrogation processing for the first to nth management apparatus regarding operating conditions of the installation equipment collectively managed by the first to nth management apparatus, and an allocation unit (34b) that allocates different interrogation processors to the first to nth management apparatus, respectively, one at a time.
The allocation unit allocates other allocation processors to the first to nth management apparatus according to an interrogation processing state of the installation equipment by at least one of the interrogation processors.

## Description

### TECHNICAL FIELD

The present invention relates to a group management apparatus that collectively manages installation equipment groups comprising plural installation equipment and to a group management program thereof.

### BACKGROUND ART

Conventionally, management systems are adopted where a large number of items of installation equipment are separated into a plurality of groups of installation equipment. A management apparatus is then connected to each group and the installation equipment belonging to the group is then managed centrally (refer to patent document 1).

In such a management system, it is necessary to individually confirm a plurality of management apparatus connected to each installation equipment group in order to comprehend the operating conditions of the installation equipment. Then, it is conceivable to dispose a group management apparatus that connects with the plurality of management apparatus and to let the group management apparatus carry out interrogation processing for the plurality of management apparatus to acquire the information relating to the operating conditions of installation equipment within the system so that it can be easy to confirm the operating conditions of the plurality of installation equipment collectively managed by the plurality of management apparatus installed within the system.

Patent Document 1: Japanese Patent Publication Laid-open No. 2003-302091

### DISCLOSURE OF THE INVENTION

When information relating to the operating conditions of the installation equipment is acquired from a plurality of management apparatus and the operating conditions of the installation equipment are comprehended based on the information, the information at the group management apparatus is preferably the one that is acquired in the same time period. However, while the group management apparatus carries out interrogation processing for a plurality of management apparatus, if a communication error occurs during interrogation processing for one management apparatus, it is not possible for the group management apparatus to carry out interrogation processing for other management apparatus. This means that difference between the timing of acquiring the information from one management apparatus and the timing of acquiring the information from other management apparatus can be large.

The present invention therefore provides a group management apparatus and a group management program that reduce the differences in the timing of acquiring information relating to operating conditions for installation equipment from a plurality of management apparatus.

### TECHNICAL PROBLEM

A group management apparatus of a first aspect of the invention collectively manages first to nth installation equipment groups and includes a plurality of interrogation processors and an allocation unit. The group management apparatus is connected to the first to nth management apparatus. The first to nth management apparatus collectively manage a plurality of installation equipment belonging to the first to nth installation equipment groups. The interrogation processor repeatedly carries out interrogation processing for the first to nth management apparatus with regard to operating conditions of the installation equipment collectively managed by the first to nth management apparatus, respectively. The allocation unit allocates different interrogation processors to the first to nth management apparatus, respectively, one at a time. Further, the allocation unit allocates other allocation processors to the first to nth management apparatus according to an interrogation processing state of the installation equipment by at least one of the interrogation processors.

The group management apparatus of the present invention includes a plurality of interrogation processors that carry out interrogation processing for the plurality of management apparatus. The allocation unit then allocates any of the interrogation processors to any of the management apparatus according to the interrogation processing state of the interrogation processors.

This means that a plurality of interrogation processors carry out interrogation process for the management apparatus in parallel according to the processing state of the other interrogation processors. Therefore, if a communication error occurs when one interrogation processor carries out interrogation processing for one management apparatus, other interrogation processors can carry out interrogation processing for other management apparatus, which reduces the differences in the timing of acquiring information at the group management apparatus from each management apparatus.

A group management apparatus of a second aspect of the invention is the group management apparatus of the first aspect of the invention, the group management apparatus further comprising an operation unit. The operation unit decides the number of interrogation processors based on predetermined states.

The group management apparatus of the present invention is provided with an operation unit that decides the number of interrogation processors based on predetermined states. An appropriate number of interrogation processors are therefore provided automatically. The predetermined states are conditions decided arbitrarily by the user and can be, for example, conditions such as the number of management apparatus connected or the interval at which interrogation processing is repeated.

An appropriate number of interrogation processors are therefore provided automatically at the group management apparatus, which makes it possible to complete the interrogation processing for all of the management apparatus in the time desired by the user.

A group management apparatus of a third aspect of the invention is the group management apparatus of the second aspect of the invention, the group management apparatus further comprising a storage unit. The storage unit stores an operating and viewing program capable of operating the installation equipment and/or viewing an operating condition of the installation equipment. The operating and viewing program is capable of being executed at a party concerned management apparatus in the possession of a party concerned of the installation equipment.

At the group management apparatus of the present invention, an operating and viewing program capable of operating the installation equipment and/or viewing an operating condition of the installation equipment is stored in the storage unit. The operating and viewing program can be executed at a party concerned management apparatus that a party concerned of the installation equipment operates.

Therefore, it becomes possible to operate installment equipment and/or view the operating conditions of the installation equipment at apparatus other than the group management apparatus.

A group management apparatus of a fourth aspect of the invention collectively manages first to nth installation equipment groups and includes an interrogation processor and a deciding unit. The group management apparatus is connected to the first to nth management apparatus. The first to nth management apparatus collectively manage a plurality of installation equipment belonging to the first to nth installation equipment groups. The interrogation processor repeatedly carries out an interrogation process of the first to nth management apparatus regarding the operating conditions of the installation equipment that are collectively managed by the first to nth management apparatus, respectively. The deciding unit decides an order of interrogation process for the first to nth management apparatus by the interrogation processor. The order of interrogation processing for the first to nth management apparatus is decided based on the state of past interrogation processing by the interrogation processor. The interrogation processor carries out the interrogation processing for the first to nth management apparatus based on the order decided by the deciding unit.

With the group management apparatus of the present invention, the order of interrogation processing for the management apparatus is decided based on the state of past interrogation processing by the interrogation processor.

The next interrogation processing is carried out based on the state of past interrogation processing so that information can be acquired efficiently. Therefore, differences in the timing of acquiring information at the group management apparatus from each management apparatus can be reduced.

A group management apparatus of a fifth aspect of the present invention is the group management apparatus of the fourth aspect of the present invention, the order of the interrogation processing decided by the deciding unit giving priority to interrogation processing for the first to nth management apparatus for which the interrogation processing in the past carried out without any problems.

With the group management apparatus of the present invention, the deciding unit decides the order to give priority to the interrogation processing of management apparatus that were carried out in the past without any problems.

For example, if the interrogation processing is carried out for management apparatus to which a communication error might be taking place during the interrogations processing for management apparatus to which normal communication can be achieved, a long period of time is required until interrogation processing is carried out for the management apparatus to which normal communication can be achieved. By eliminating this inconvenience and giving priority to the interrogation processing for management apparatus that can be carried out interrogation processing without any problems, the differences in the timing of acquiring information at the group management apparatus from each management apparatus can be reduced.

A group management apparatus of a sixth aspect of the invention is the group management apparatus of the fourth aspect of the invention, the group management apparatus further comprising a storage unit. The storage unit stores an operating and viewing program capable of operating the installation equipment and/or viewing an operating condition of the installation equipment. The operating and viewing program is capable of being executed at a party concerned management apparatus that a party concerned of the installation equipment operates.

At the group management apparatus of the present invention, an operating and viewing program capable of operating the installation equipment and/or viewing an operating condition of the installation equipment is stored in the storage unit. The operating and viewing program can be executed at a party concerned management apparatus that a party concerned of the installation equipment operates.

Therefore, it becomes possible to operate installment equipment at apparatus other than the group management apparatus and/or view the operating condition of the installation equipment.

A group management apparatus of a seventh aspect of the invention collectively manages first to nth installation equipment groups and includes an interrogation processor, a communication error detector, and a storage unit. The group management apparatus is connected to the first to nth management apparatus. The first to nth management apparatus collectively manage a plurality of installation equipment belonging to the first to nth installation equipment groups. The interrogation processor repeatedly carries out interrogation processing for the first to nth management apparatus as to operating conditions of the installation equipment that are collectively managed by the first to nth management apparatus, respectively. The communication error detector detects whether or not communication errors are present in the communication states of the first to nth management apparatus. The storage unit stores detection results by the communication error detector. The interrogation processor carries out the interrogation process for the first to nth management apparatus based on the detection results stored in the storage unit during interrogation processing of the operating conditions.

The group management apparatus of the present invention is provided with an interrogation processor that carries out interrogation process for the management apparatus as to the operating conditions of collectively managed air conditioning apparatus and a communication error detector that detects communication errors between the group management apparatus and the management apparatus. The interrogation processor then carries out interrogation processing based on the detection results of the communication error detector.

The interrogation processor carries out interrogation processing based on detection results stored in the storage unit by the communication error detector. It is therefore possible to acquire information relating to the operating conditions of the air conditioning apparatus efficiently from each management apparatus. It is therefore possible to make the time differences of acquiring the information small, the information being acquired from each management apparatus by the group management apparatus.

A group management apparatus of an eighth aspect of the present invention is the group management apparatus of the seventh aspect of present invention, the interrogation processor carrying out interrogation processing for only management apparatus of the first to nth management apparatus that did not show errors in communication states in the past based on the detection results stored in the storage unit during interrogation processing of the operating conditions.

The group management apparatus of the present invention only carries out interrogation processing for management apparatus for which there are no errors detected by the communication error detector. It is therefore possible to carry out interrogation processing for all of the management apparatus without delays. Then, the differences in the timing of acquiring information at the group management apparatus can be reduced.

A group management apparatus of the ninth aspect of the present invention is the group management apparatus of the seventh aspect of present invention, the storage unit storing an operating and viewing program capable of operating the installation equipment and/or viewing an operating condition of the installation equipment. The operating and viewing program can then be executed at a party concerned management apparatus that a party concerned of the installation equipment operates.

At the group management apparatus of the present invention, an operating and viewing program capable of operating the installation equipment and/or viewing an operating condition of the installation equipment is stored in the storage unit. The operating and viewing program can be executed at a party concerned management apparatus that a party concerned of the installation equipment operates.

Operation of installation equipment at apparatus other than the group management apparatus and/or view of the operating condition of the installation equipment are therefore possible.

A program of a tenth aspect of the present invention is a program executed in group management apparatus that collectively manages first to nth installation equipment groups, the program including a setting step, an allocation step, and a processing step. The group management apparatus is connected to first to nth management apparatus that collectively manage a plurality of installation equipment belonging to the first to nth installation equipment groups. The setting step sets a plurality of interrogation processors. The interrogation processor repeatedly carry out interrogation processing for the first to nth management apparatus regarding operating conditions of the installation equipment collectively managed by the first to nth management apparatus. The allocation step allocates different interrogation processors to the first to nth management apparatus, respectively, one at a time. In the interrogation step, the interrogation processors allocated in the allocation step carry out interrogation processing for the allocated first to nth management apparatus. The allocation step allocates other interrogation processors to the first to nth management apparatus according to a state of interrogation processing of at least one of the interrogation processors in the interrogation step.

The program of the present invention provides a plurality of interrogation processors that carry out interrogation processing for the plurality of management apparatus. The plurality of interrogation processors can then be allocated according to the interrogation processing state of at least one management apparatus.

This means that a plurality of interrogation processors carry out interrogation processing for the management apparatus in parallel while taking into consideration of the processing state of the other interrogation processors. It is therefore possible for other interrogation processors to carry out interrogation processing for other management apparatus even when a communication error occurs, for example, while one interrogation processor carries out interrogation processing for one management apparatus. The differences in the timing of acquiring information at the group management apparatus from each management apparatus can be reduced.

A program of an eleventh aspect of the present invention is a program executed in group management apparatus that collectively manages first to nth installation equipment groups, the program including a setting step, a deciding step, and an interrogation step. The group management apparatus is connected to first to nth management apparatus that collectively manage a plurality of installation equipment belonging to the first to nth installation equipment groups. The setting step sets an interrogation processor. The interrogation processor repeatedly carries out interrogation processing for the first to nth management apparatus regarding operating conditions of the installation equipment collectively managed by the first to nth management apparatus, respectively. The deciding step decides an order of interrogation processing for the first to nth management apparatus by the interrogation processor. The interrogation step carries out interrogation processing for the first to nth management apparatus. The deciding step decides the order of interrogation processing for the first to nth management apparatus based on past interrogation processing states. The interrogation step carries out interrogation processing for the first to nth management apparatus based on the order decided in the deciding step.

The program of the present invention decides the order of interrogation processing based on past interrogation processing states of the interrogation processor and interrogation processing carried out for the management apparatus by the interrogation processors.

It is therefore possible to efficiently acquire information because the next interrogation processing is carried out based on the state of past interrogation processing. This means the differences in timing of acquiring the information at the group management apparatus from each management apparatus can be reduced.

A program of an twelfth aspect of the present invention is a program executed in group management apparatus that collectively manages first to nth installation equipment groups, the program including a setting step, an interrogation step, a communication error detection step, and a storage step. The group management apparatus is connected to first to nth management apparatus that collectively manage a plurality of installation equipment belonging to the first to nth installation equipment groups. The setting step sets an interrogation processor. The interrogation processor repeatedly carries out interrogation processing for the first to nth management apparatus regarding operating conditions of the installation equipment that is collectively managed by the first to nth management apparatus. The interrogation step carries out interrogation processing for the first to nth management apparatus. The communication error step detects whether or not there are errors in the communication states of the first to nth management apparatus. The storage step stores results of the communication states detected in the communication error detection step. The interrogation step is executed in parallel with the communication error detection step. The interrogation steps carries out interrogation processing for the first to nth management apparatus based on the detection results stored in the storage step during interrogation processing.

In the program of the present invention, it is executed that a step of carrying out interrogation processing of the operating condition of air conditioning apparatus collectively managed by the management apparatus and a step of detecting errors in communication between the group management apparatus and the management apparatus in parallel. Interrogation processing is then executed based on the communication error detection results.

Interrogation processing is executed based on the communication error detection results stored in the storage unit. It is therefore possible to acquire information relating to the operating conditions of the air conditioning apparatus efficiently from each management apparatus. It is therefore possible to reduce the differences in timing of acquiring the information at the group management apparatus from each management apparatus.

### ADVANTAGEOUS EFFECTS

With the group management apparatus of the first aspect of the present invention, if a communication error occurs when one interrogation processor carries out interrogation processing for one management apparatus, other interrogation processors can carry out interrogation processing for other management apparatus, which reduces the differences in the timing of acquiring information at the group management apparatus from each management apparatus.

In the group management apparatus of the second aspect of the present invention, an appropriate number of interrogation processors are automatically provided, which makes it possible to complete the interrogation processing for all of the management apparatus in the time desired by the user.

With the group management apparatus of the third aspect of the present invention, operation of installation equipment at apparatus other than the group management apparatus and/or view of the operating conditions of the installation equipment are therefore possible.

The group management apparatus of the fourth aspect of the present invention can efficiently acquire information, which can reduce the differences in timing of acquiring information at the group management apparatus from each management apparatus.

With the group management apparatus of the fifth aspect of the present invention, by giving priority to the interrogation processing for management apparatus that can be carried out interrogation processing without any problems, the differences in the timing of acquiring information at the group management apparatus from each management apparatus can be reduced.

With the group management apparatus of the sixth aspect of the present invention, operation of installation equipment at apparatus other than the group management apparatus and/or view of the operating conditions of the installation equipment are therefore possible.

With the group management apparatus of the seventh aspect of the present invention, it is possible to acquire information relating to the operating conditions of the air conditioning apparatus efficiently from each management apparatus. It is therefore possible to reduce the differences in timing of acquiring the information at the group management apparatus from each management apparatus.

With the group management apparatus of the eighth aspect of the present invention, it is possible to carry out interrogation processing for all of the management apparatus without delays and then, it is possible to reduce the differences in timing of acquiring the information at the group management apparatus.

With the group management apparatus of the ninth aspect of the present invention, operation of installation equipment at apparatus other than the group management apparatus and/or view of the operating conditions of the installation equipment are therefore possible.

With the program of the tenth aspect of the present invention, even when a communication error occurs while one interrogation processor is carrying out an interrogation processing for one management apparatus, other interrogation processors can carry out interrogation processing for other management apparatus. It is therefore possible to reduce the differences in timing of acquiring the information at the group management apparatus from each management apparatus.

With the program of the eleventh aspect of the present invention, it is therefore possible to efficiently acquire the information because the next interrogation processing is carried out based on the state of past interrogations processing. This means that the differences in timing of acquiring the information at the group management apparatus from each management apparatus can be reduced.

With the program of the twelfth aspect of the present invention, it is possible to acquire the information relating to the operating conditions of the air conditioning apparatus efficiently from each management apparatus. It is therefore possible to reduce the differences in timing of acquiring the information at the group management apparatus from each management apparatus.

### BRIEF DESCRIPTION OF THE DRAWINGS

Fig. 1 is a diagram showing an overall configuration for a group management system according to first to third embodiments of the present invention;
Fig. 2 is a diagram showing a configuration for an air conditioning apparatus according to the first to third embodiments of the present invention;
Fig. 3 is a diagram showing a configuration for a management apparatus according to the first to third embodiments of the present invention;
Fig. 4 is a diagram showing a management screen for a management program according to the first to third embodiments of the present invention;
Fig. 5 is a diagram showing a configuration for a group management apparatus according to the first embodiment of the present invention;
Fig. 6 is a diagram showing a communication method for a group management program according to a first embodiment of the present invention;
Fig. 7 is a diagram showing a management screen of a group management program according to the first to third embodiments of the present invention;
Fig. 8 is a further diagram showing a management screen of a group management program according to the first to third embodiments of the present invention;
Fig. 9 is a diagram showing the flow of control by the group management program according to the first embodiment of the present invention;
Fig. 10 is a diagram showing the flow of control by the group management program according to the first to third embodiments of the present invention;
Fig. 11 is a further diagram showing the flow of control by the group management program according to the first to third embodiments of the present invention;
Fig. 12 is a diagram showing a configuration for a group management apparatus according to a second embodiment of the present invention;
Fig. 13 is a diagram showing a communication method for a group management program according to the second embodiment of the present invention;
Fig. 14 is a diagram showing the flow of control by the group management program according to the second embodiment of the present invention;
Fig. 15 is a diagram showing a configuration for a group management apparatus according to the third embodiment of the present invention;
Fig. 16 is a diagram showing a communication method for a group management program according to the third embodiment of the present invention;
Fig. 17 is a diagram showing the flow of control by the group management program according to the third embodiment of the present invention;
Fig. 18 is a diagram showing the flow of control by the group management program according to the third embodiment of the present invention; and
Fig. 19 is a diagram showing an overall configuration for a group management system according to a modified example (6) of the present invention.

### DESCRIPTION OF THE REFERENCE SYMBOLS

- 10c1, 10c2, ..., 10cn: air conditioning apparatus
- 15b1, 15b2, ..., 15bn: air conditioning apparatus group
- 20a1, 20a2, ..., 20an: management apparatus
- 30, 130, 230: group management apparatus
- 31, 131, 131: group management communication unit
- 32, 132, 232: group management display unit
- 33, 133,233: group management storage unit
- 34,134,234: group management control unit
- 100: group management system

### BEST MODE FOR CARRYING OUT THE INVENTION

### <First Embodiment>

The following is a description with reference to the drawings of a group management system 100 using a group management apparatus 30 of a first embodiment of the present invention.

### <Overall Configuration>

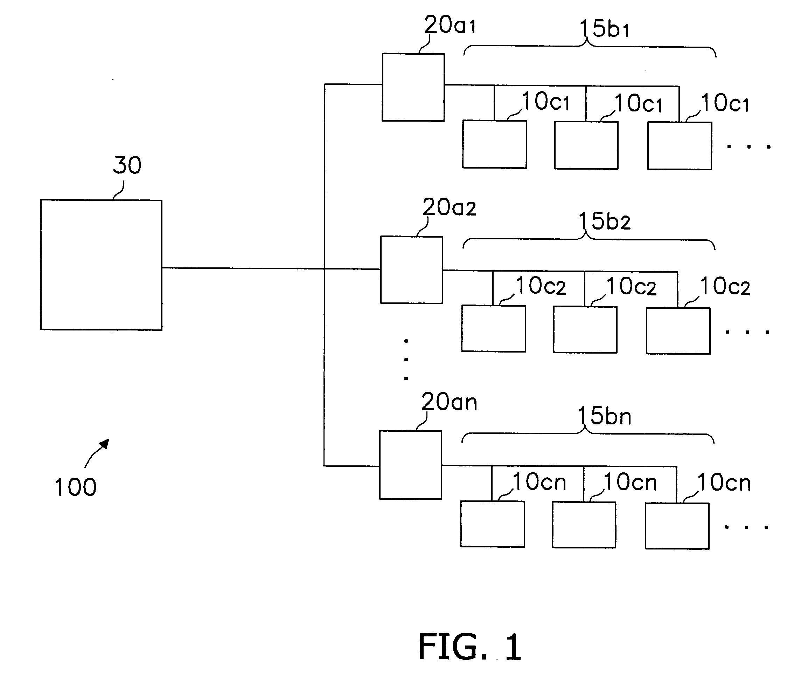

Fig. 1 is a view showing a configuration for the group management system 100 of this embodiment. The group management system 100 is a management system for air conditioning apparatus 10c1, 10c2, ..., 10cn that can be used at locations such as universities, hospitals and factories. The group management system 100 includes the plurality of air conditioning apparatus 10c1, 10c2, ..., 10cn, management apparatus 20a1, 20a2, ..., 20an that collectively manage the air conditioning apparatus 10c1, 10c2, ..., 10cn, and group management apparatus 30 for collectively managing air conditioning apparatus groups 15b1, 15b2, ..., 15bn constituted by the plurality of air conditioning apparatus 10c1, 10c2, ..., 10cn.

At the group management system 100, the air conditioning apparatus 10c1, 10c2, ..., 10cn are connected using a dedicated control line to the management apparatus 20a1, 20a2, ..., 20an, and the group management apparatus 30 is connected to the management apparatus 20a1, 20a2, ..., 20an via an Intranet line.

The numbers of management apparatus 20a1, 20a2, ..., 20an, the numbers of the air conditioning apparatus groups 15b1, 15b2, ..., 15bn connected to the management apparatus 20a1, 20a2, ..., 20an, and the plurality of air conditioning apparatus 10c1, 10c2, ..., 10cn belonging to the air conditioning apparatus groups 15b1, 15b2, ..., 15bn in the group management system 100 are by no means limited to the numbers shown in Fig. 1.

### <Configuration of Each Section>

### (1) Outline of configuration for air conditioning apparatus 10c1, 10c2, ..., 10cn

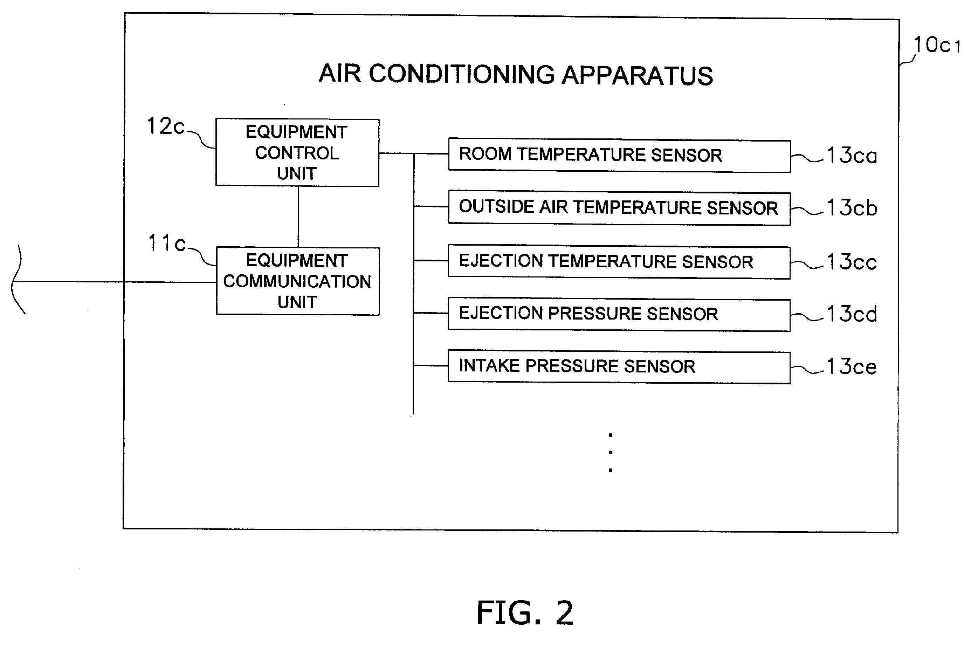

At the group management system 100, the plurality of air conditioning apparatus 10c1, 10c2, ..., 10cn are installed so as to be connected to the plurality of management apparatus 20a1, 20a2, ..., 20an at a location such as a university, a hospital, or a factory. The following description is given of the air conditioning apparatus 10c1 using Fig. 2 but the same also applies for the remaining air conditioning apparatus 10c2, ..., 10cn.

The air conditioning apparatus 10c1 has a cooling circuit made up of compressors, heat exchangers, and the like (not shown). Various sensors 13ca, 13cb, 13cc, 13cd, 13ce, ... are attached to the air conditioning apparatus 10c1. The sensor 13ca detects the temperature of the room where the air conditioning apparatus 10c1 is installed. The sensor 13cb detects the temperature of outside air in the vicinity of equipment where the air conditioning apparatus 10c1 is installed. The sensor 13cc detects an ejection temperature that is the temperature of a refrigerant in an ejection pipe of a compressor included in the air conditioning apparatus 10c1. The sensor 13cd detects an ejection pressure that is the pressure of the refrigerant in the ejection pipe of the compressor included in the air conditioning apparatus 10c1. The sensor 13ce detects an intake pressure of the refrigerant in an intake pipe of the compressor included at the air conditioning apparatus 10c1.

The air conditioning apparatus 10c1 has an equipment communication unit 11c and an equipment control unit 12c. The equipment communication unit 11c is connected to the management apparatus 20a1 by a dedicated control line. The equipment control unit 12c controls the operation of the air conditioning apparatus 10c1 according to a control instruction sent from outside. The equipment control unit 12c is connected to each of the various sensors 13ca, 13cb, 13cd, 13ce, ... Values detected by each of the various sensors 13ca, 13cb, 13cd, 13ce, ... (equipment information) are then sent to the management apparatus 20a1 at predetermined intervals (in this embodiment, one minute). The equipment control unit 12c compares values acquired from each of the various sensors 13ca, 13cb, 13cd, 13ce, ..., at predetermined intervals (in this embodiment, one minute) with a predetermined threshold value. When the equipment control unit 12c detects an abnormality such as a value that exceeds a predetermined threshold, the equipment control unit 12c also transmits abnormality information indicating that abnormality to the management apparatus 20a1 as equipment information.

### (2) Outline of configuration for management apparatus 20a1, 20a2, ..., 20an

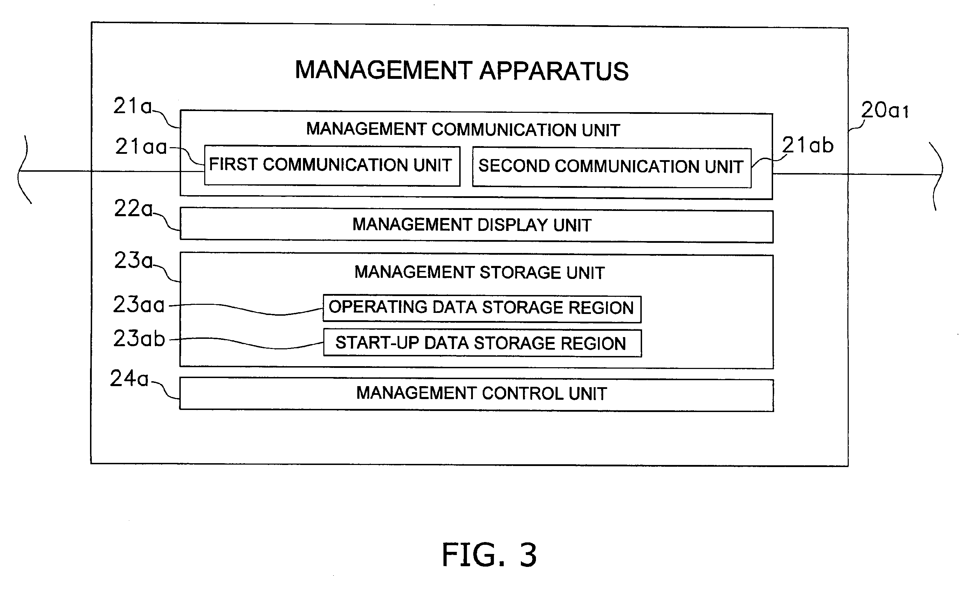

The management apparatus 20a1, 20a2, ..., 20an are installed at the location where the air conditioning apparatus 10c1, 10c2, ..., 10cn are provided, and collectively manage the plural air conditioning apparatus 10c1, 10c2, ..., 10cn via a dedicated control line. The management apparatus 20a1, 20a2, ..., 20an are respectively provided to air conditioning apparatus group 15b1, 15b2, ..., 15bn constituted by the plurality of air conditioning apparatus 10c1, 10c2, ..., 10cn and are connected to the group management apparatus 30 as described in the following. The air conditioning apparatus groups 15b1, 15b2, ..., 15bn are groups into which a system administrator dividing the plurality of air conditioning apparatus 10c1, 10c2, ..., 10cn. The management apparatus 20a1, 20a2, ..., 20an are then connected every group for ease of management of the air conditioning apparatus 10c1, 10c2, ..., 10cn. Each of the management apparatus 20a1, 20a2, ..., 20an then manages the air conditioning apparatus 10c1, 10c2, ..., 10cn belonging to the respectively connected air conditioning apparatus groups 15b1, 15b2, ..., 15bn. The following description is given of the management apparatus 20a1 using Fig. 3, but the same also applies for the remaining management apparatus 20a2, ..., 20an.

As shown in Fig. 3, the management apparatus 20a1 mainly comprises a management communication unit 21a, a management display unit 22a, a management storage unit 23a, and a management control unit 24a.

The management communication unit 21a has a first communication unit 21 aa and a second communication unit 21ab. The first communication unit 21aa receives a control signal from the group management apparatus 30 described later. The second communication unit 21 ab sends a control signal to the air conditioning apparatus 10c1 belonging to the air conditioning apparatus group 15b1 connected to the management apparatus 20a1 and receives equipment information from the air conditioning apparatus 10c1. It will be noted that the "Equipment information" refers to values detected by each of the various sensors 13ca, 13cb, 13cd, 13ce, ... provided at the air conditioning apparatus 10c1, information relating to abnormality of the air conditioning apparatus 10c1, and information relating to the operating conditions of the air conditioning apparatus 10c1 understood by the management control unit 24a by periodically connecting to the equipment control unit 12c of the air conditioning apparatus 10c1 as described in the following.

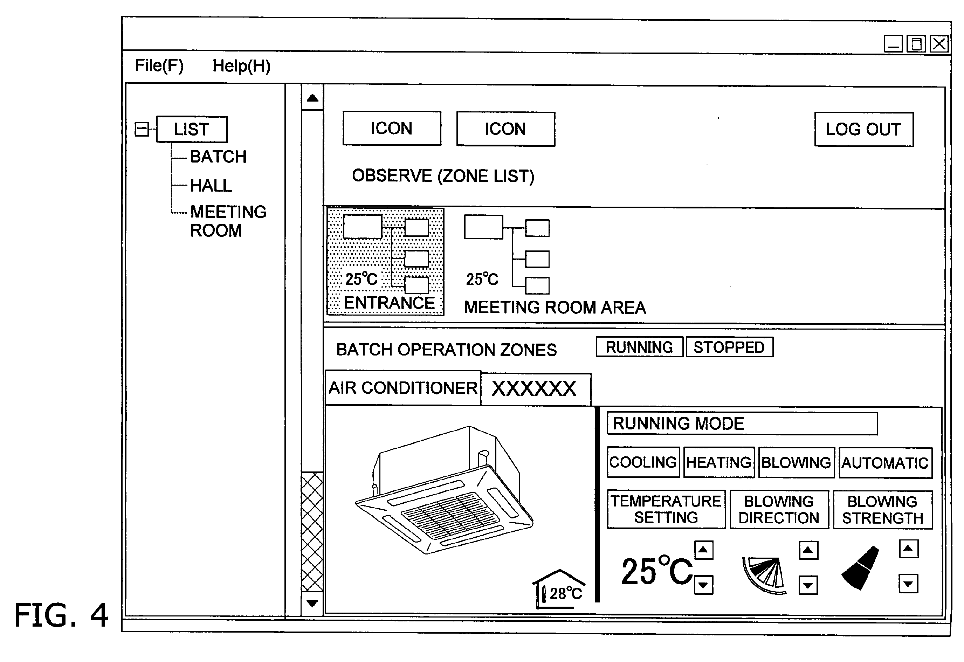

The management display unit 22a displays a management screen (refer to Fig. 4) when a later-described management program is executed. The management screen is a screen displaying information received by the management apparatus 20a and is an operation screen that accepts control of the plurality of air conditioning apparatus 10c1 by the management apparatus 20a1.

An operating data storage region 23aa and a start-up data storage region 23ab are secured at the management storage unit 23a. The equipment information that has been received from the air conditioning apparatus 10c1 is accumulated in the operating data storage region 23aa. The start-up data storage region 23ab is a region that stores settings in regard to after how many seconds after receiving the instructions that the air conditioning apparatus 10c1 connected to the management apparatus are to be started up, when the management apparatus 20a1 receives a batch start-up instruction from the later-described group management apparatus 30. A region for storing a management program for managing the air conditioning apparatus 10c1 connected to the management apparatus 20a1 is ensured at the management storage unit 23a.

The management control unit 24a executes a management program stored in the management storage unit 23a and collectively manages the plurality of air conditioning apparatus 10c1 belonging to the air conditioning apparatus group 15b1 connected to the management apparatus 20a1. Specifically, the management control unit 24a determines at a predetermined interval whether or not there are abnormalities in the air conditioning apparatus 10c1 based on equipment information stored in the operating data storage region 23aa. The management control unit 24a is periodically connected to the equipment control unit 12c the air conditioning apparatus 10c1 is provided with and comprehends the operating conditions of the air conditioning apparatus 10c1 (for example, conditions such as "running" or "stopped"). The management control unit 24a then controls operation of the plurality of air conditioning apparatus 10c1 (running or stopping the air conditioning apparatus, changing operation modes, such as a cooling mode, a heating mode, and an air blowing mode, changing the temperature, changing the blowing direction, and changing the blowing rate, etc.).

### (3) Outline of configuration for group management apparatus 30

One group management apparatus 30 is installed in the premises where the air conditioning apparatus 10c1, 10c2, ..., 10cn are provided, such as a location where a system administrator that manages the air conditioning apparatus 10c1, 10c2, ..., 10cn is on stand-by. The group management apparatus 30 is also connected to the plurality of management apparatus 20a1, 20a2, ..., 20an and acquires information relating to the operating conditions of the air conditioning apparatus 10c1, 10c2, ..., 10cn that are collectively managed by each of the management apparatus 20a1, 20a2, ..., 20an via the management apparatus 20a1, 20a2, ..., 20an. The group management apparatus 30 comprehends the operating conditions of the air conditioning apparatus groups 15b1, 15b2, ..., 15bn based on acquired information relating to the operating conditions of the air conditioning apparatus 10c1, 10c2, ..., 10cn belonging to the air conditioning apparatus groups 15b1, 15b2, ..., respectively, and collectively manages the air conditioning apparatus groups 15b1, 15b2, ..., 15bn.

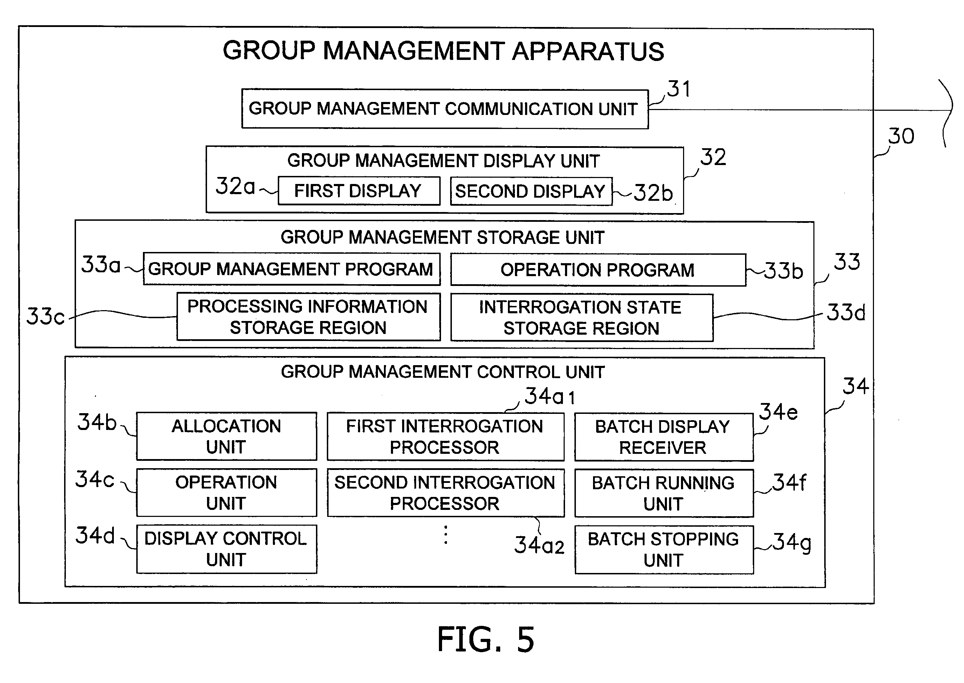

As shown in Fig. 5, the group management apparatus 30 mainly comprises a group management communication unit 31, a group management display unit 32, a group management storage unit 33, and a group management control unit 34.

The group management communication unit 31 is connected to the first communication unit 21 aa of the management communication unit 21a via an intranet line. The group management communication unit 31 sends control signals to the management apparatus 20a1, 20a2, ..., 20an and receives equipment information for the air conditioning apparatus 10c1, 10c2, ..., 10cn that are collectively managed by each of the management apparatus 20a1, 20a2, ..., 20an from the management apparatus 20a1, 20a2, ..., 20an.

The group management display unit 32 is mainly comprised of a first display 32a and a second display 32b. The first display 32a displays, per group, management results for the plurality of air conditioning apparatus groups 15b1, 15b2, ..., 15bn by the later-described group management control unit 34. The second display 32b comprehensively displays management results for the plurality of air conditioning apparatus groups 15b1, 15b2, ..., 15bn by the later-described group management control unit 34.

A region 33a for storing a group management program for collectively managing air conditioning apparatus groups 15b1, 15b2, ..., 15bn connected to the group management apparatus 30 is ensured at the group management storage unit 33. A processing information storage region 33b is ensured at the group management storage unit 33. The processing information storage region 33b stores information relating to the operating conditions of the air conditioning apparatus 10c1, 10c2, ..., 10cn that are acquired from the management apparatus 20a1, 20a2, ..., 20an by the later-describing interrogation processors 34a1, 34a2, ...

The group management control unit 34 has the interrogation processors 34a1, 34a2, ..., an allocation unit 34b, an operation unit 34c, a display control unit 34d, a batch display receiver 34e, a batch running unit 34f, and a batch stopping unit 34g.

While the group management program is executed at the group management apparatus 30, the interrogation processors 34a1, 34a2, ... carry out interrogation processing for the management apparatus 20a1, 20a2, ..., 20an in order to acquire information relating to the operating conditions of the air conditioning apparatus groups 15b1, 15b2, ..., 15bn. The interrogation processing is a process that is carried out for the management apparatus 20a1, 20a2, ..., 20an to interrogate as to the operating conditions of the air conditioning apparatus 10c1, 10c2, ..., 10cn that are collectively managed by the management apparatus 20a1, 20a2, ..., 20an, respectively. The interrogation processors 34a1, 34a2, ... refer to threads that can be allocated within the CPU. The interrogation processing performed by the interrogation processors 34a1, 34a2, ... is repeated every data collection interval described later.

The operation unit 34c calculates the number of interrogation processors based on predetermined states. The predetermined states are states decided arbitrarily by the user. In this embodiment, the number of management apparatus 20a1, 20a2, ..., 20an connected to the group management apparatus 30 and the data collection interval desired by the system administrator etc. are used as the predetermined states. The data collection interval is the interval of updating the operating conditions of the air conditioning apparatus groups 15b1, 15b2, ..., 15bn at the group management apparatus 30. Specifically, this is the interval after the interrogation processing of the operating conditions for all of the management apparatus 20a1, 20a2, ..., 20an connected to the group management apparatus 30 in order from the first management apparatus 20a1 to the last management apparatus 20an until the following interrogation processing of the operating conditions of the first management apparatus 20a1. In this embodiment, one hundred and fifty management apparatus from management apparatus 20a1 to management apparatus 20a150 are connected to the group management apparatus 30. Conditions are then set to be able to acquire information relating to the operating conditions of the air conditioning apparatus 10c1, 10c2, ..., 10cn collectively managed by the management apparatus 20a1 to 20a150, respectively, from all of the management apparatus 20a1 to 20a150 within every ten minutes. The number of interrogation processors 34a1, 34a2, ... decided by the operation unit 34c based on the conditions are then provided.

The allocation unit 34b then allocates the interrogation processors 34a1, 34a2, ... , the number of which being decided by the operation unit 34c, to the management apparatus 20a1, 20a2, ..., 20an connected to the group management apparatus 30, respectively.

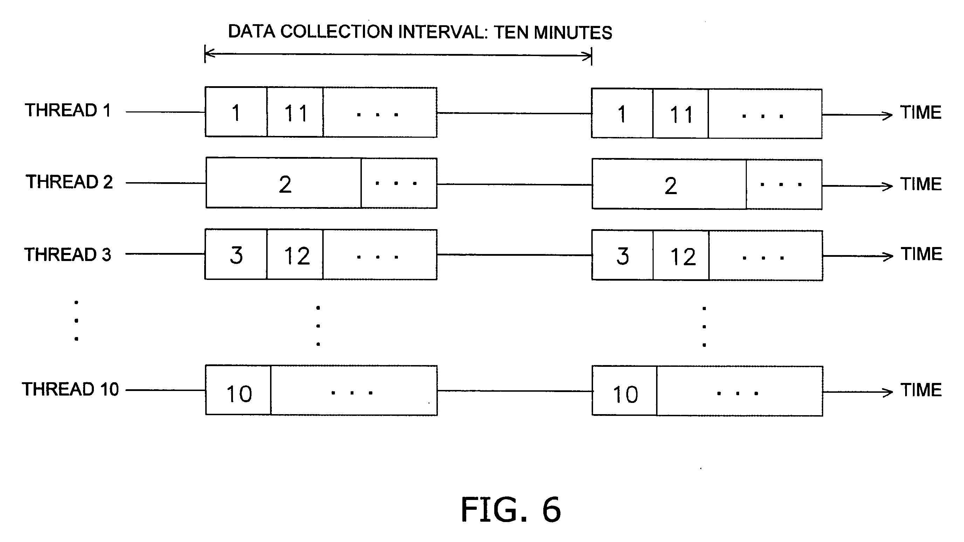

The following is a detailed description using Fig.6. In this embodiment, the operation unit 34c decides the number of the interrogation processors 34a1, 34a2, ... based on an equation "thread number > the number of management apparatus x time-out time/data collection interval". For example, when the number of interrogation processors 34a1, 34a2, ... is decided to ten by the operation unit 34c, the allocation unit 34b allocates a first interrogation processor 34a1 to a tenth interrogation processor 34a10 to the first management apparatus 20a1 to the tenth management apparatus 20a10, respectively. The first interrogation processor 34a1 to the tenth interrogation processor 34a10 then carry out the interrogation processing for the first management apparatus 20a1 to the tenth management apparatus 20a10, allocated respectively. The allocation unit 34b looks at the interrogation processing state of the first management apparatus 20a1 to the tenth management apparatus 20a10 and allocates interrogation processors to carry out the interrogation processing for the eleventh management apparatus 20a11 to the one-hundred and fiftieth management apparatus 20a150. For example, when communication with the first management apparatus 20a1 is carried out normally by the first interrogation processor 34a1 and interrogation processing is complete, the allocation unit 34b allocates the first interrogation processor 34a1 for which interrogation processing is complete to the eleventh management apparatus 20a11. On the other hand, when communication with the second management apparatus 20a2 by the second interrogation processor 34a2 is not completed for a reason such as a communication error so that the second interrogation processor 34a2 awaits a response from the second management apparatus 20a2, the allocation unit 34b allocates a third interrogation processor 34a3 of which interrogation processing for the third management apparatus 20a3 is complete to the interrogation processing for a twelfth management apparatus 20a12. When there is no response from the management apparatus 20a1, 20a2, ..., 20an to interrogation processing by the interrogation processors 34a1, 34a2, ... before the time-out time (in this embodiment, twenty seconds) elapses, an indication that the interrogation processing was not carried out normally is displayed at the group management display unit 32.

The group management control unit 34 makes the first display 32a and the second display 32b display whether the operating conditions of the air conditioning apparatus groups 15b1, 15b2, ..., 15bn are under the predetermined states or not, based on information relating to the operating conditions of the air conditioning apparatus 10c1, 10c2, ..., 10cn stored in the processing information storage region 33b. "Predetermined states" refers to states of running (running or stop) and abnormality (normal or abnormal).

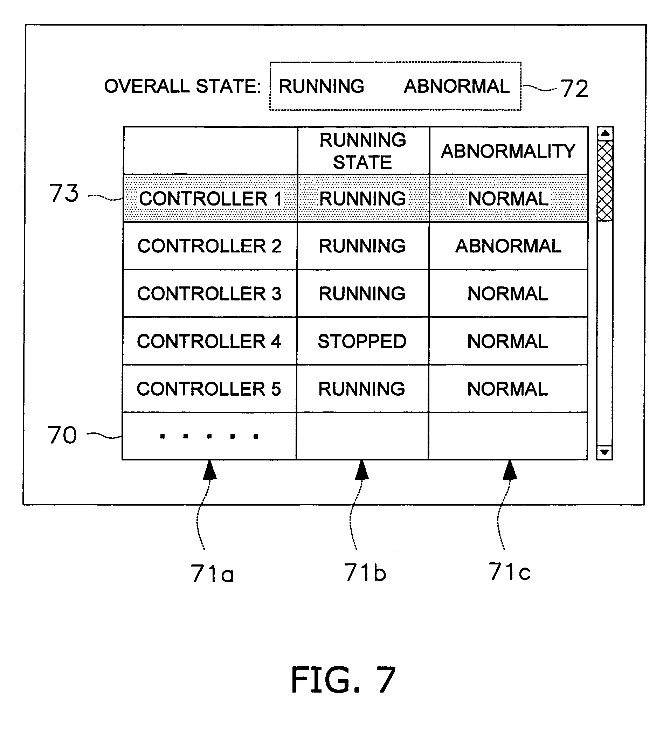

A detailed description is now given with reference to Fig.7. Fig. 7 is a diagram showing a management screen of a group management program. Each controller 1, 2, 3, ... lined up at a region 71a of a table 70 refers to the management apparatus 20a1, 20a2, ..., 20an that are connected to the air conditioning apparatus groups 15b1, 15b2, ..., 15bn. A region 71b of the table 70 indicates the running states (running or stopped) of the air conditioning apparatus groups 15b1, 15b2, ..., 15bn. A region 71c of the table 70 indicates abnormal states (abnormal or normal) of the air conditioning apparatus groups 15b1, 15b2, ..., 15bn. The operating conditions of the air conditioning apparatus groups 15b1, 15b2, ..., 15bn displayed at the regions 71b and 71c correspond to the operating conditions of the air conditioning apparatus groups 15b1, 15b2, ..., 15bn displayed at the first display 32a. The region 72 corresponds to management results of the operating conditions that the second display 32b displays comprehensively for the plurality of air conditioning apparatus groups 15b1, 15b2, ..., 15bn.

For example, when it is determined in this embodiment that there is even one air conditioning apparatus 10c1 running among the air conditioning apparatus belonging to the first air conditioning apparatus group 15b1, the group management control unit 34 displays "running" in running state column 71b of the controller 1 that is corresponding to the first management apparatus 20a1 connected to the first air conditioning apparatus group 15b1. When all of the air conditioning apparatus 10c1 are not running, "stopped" is displayed. When an abnormality is detected for at least one air conditioning apparatus 10c1 among the air conditioning apparatus belonging to the first air conditioning apparatus group 15b1 in operation, the group management control unit 34 displays "abnormal" in abnormal state column 71c of the controller 1 that is corresponding to the first management apparatus 20a1 connected to the first air conditioning apparatus group 15b1. When all of the air conditioning apparatus 10c1 are normal, "normal" is displayed. When at least one group of the air conditioning apparatus groups 15b1, 15b2, ..., 15bn is running, "running" is displayed at the region 72. When it is detected that at least one group of the air conditioning apparatus groups 15b1, 15b2, ..., 15bn is showing an abnormality, "abnormal" is displayed at the region 72.

The display control unit 34d operates as a result of receiving selections at predetermined portions of the air conditioning apparatus groups 15b1, 15b2, ..., 15bn displayed per group at the first display 32a. Management screens for the management programs started up at the management apparatus 20a1, 20a2, ..., 20an are then displayed at the group management display unit 32. Specifically, as a result of receiving selections at predetermined portions of the air conditioning apparatus groups 15b1, 15b2, ..., 15bn displayed per group, the display control unit 34d displays management screens (refer to Fig. 4) of the management program in the management apparatus 20a1, 20a2, ..., 20an that are connected to the selected air conditioning apparatus groups 15b1, 15b2, ..., 15bn at the group management display unit 32. In this embodiment, the "predetermined portion" refers to the portion shown by the region 73 of Fig. 7.

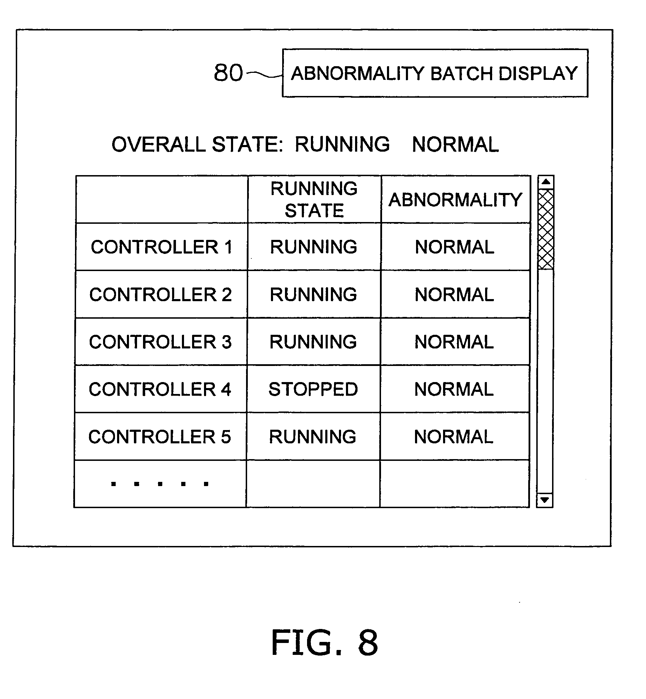

The batch display receiver 34e makes the group management display unit 32 display management screens for management programs started up at the management apparatus 20a1, 20a2, ..., 20an with respect to all of the management apparatus 20a1, 20a2, ..., 20an displaying "abnormal" at the first display 32a (region 71c in Fig. 7). The batch display receiver 34e is, for example, a button provided on a screen for displaying management result of the group management programs (refer to 80 of Fig. 8). The management screen of the management program displayed here is displayed at the group management display unit 32 of the group management apparatus 30 using a web browser.

The batch running unit 34f sends a control signal to the management apparatus 20a1, 20a2, ..., 20an to start running of the air conditioning apparatus 10c1, 10c2, ..., 10cn that are managed by the management apparatus 20a1, 20a2, ..., 20an, respectively. Upon receiving the control signal, the management apparatus 20a1, 20a2, ..., 20an then let the air conditioning apparatus 10c1, 10c2, ..., 10cn start up based on settings stored in the start-up data storage region 23ab of the management storage unit 23a. The batch stopping unit 34g sends a control signal to the management apparatus 20a1, 20a2, ..., 20an to stop running of the air conditioning apparatus 10c1, 10c2, ..., 10cn that are managed by the management apparatus 20a1, 20a2, ..., 20an, respectively.

Communication with the management apparatus 20a1, 20a2, ..., 20an from the group management apparatus 30 gives priority to interrogation processing of the operating conditions by the interrogation processors 34a1, 34a2, ...Namely, control signals for the management apparatus 20a1, 20a2, ..., 20an from the display control unit 34d, the batch display receiver 34e, the batch running unit 34f, and the batch stopping unit 34g are sent to the management apparatus 20a1, 20a2, ..., 20an after interrogation processing of the management apparatus 20a1, 20a2, ..., 20an by the interrogation processors 34a1, 34a2, ... is complete.

### <Process flow in group management system 100>

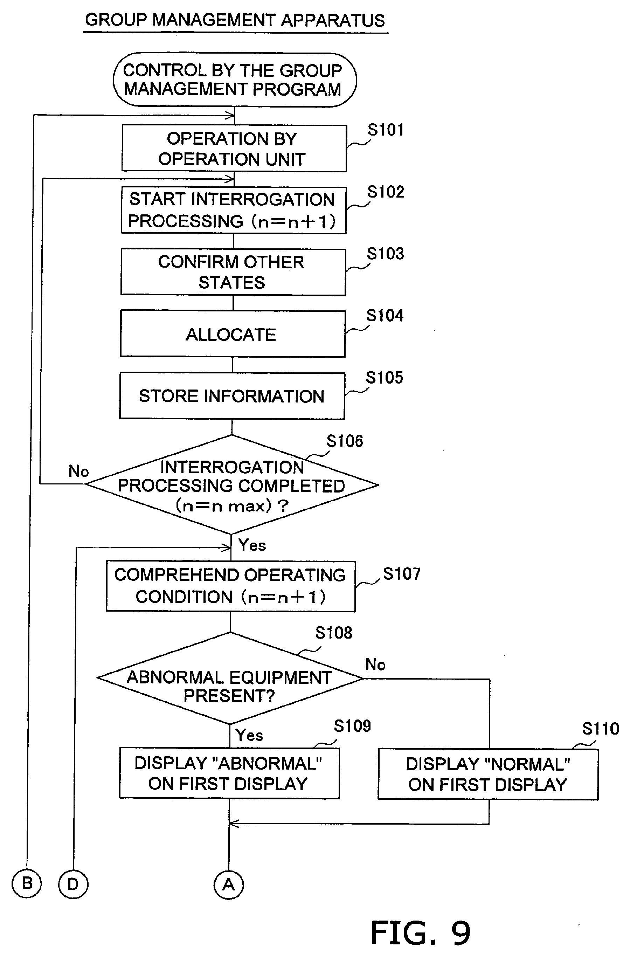

Next, a description is given with reference to Figs. 9 to 11 of the flow of control of the group management program of the group management system 100 of this embodiment.

First, the operation unit 34c decides the number of interrogation processors 34a1, 34a2, ... based on predetermined states (step S101). When the number of interrogation processors 34a1, 34a2, ... is decided in step S101, the interrogation processors 34a1, 34a2, ... start interrogation processing for the management apparatus 20a1, 20a2, ..., 20an (step S102). Here, first, all of the interrogation processors 34a1, 34a2, ... carry out interrogation process for any of the management apparatus 20a1, 20a2, ..., 20an. The allocation unit 34b then confirms the state of interrogation processing of the interrogation processors 34a1, 34a2, ... that first carried out the interrogation processing (step S103). The interrogation processors 34a1, 34a2, ... that have finished interrogation processing for any of the management apparatus 20a1, 20a2, ..., 20an are then allocated to interrogation processing for the next management apparatus 20a1, 20a2, ..., 20an (step S104). The interrogation processors 34a1, 34a2, ... then carry out interrogation processing for the management apparatus 20a1, 20a2, ..., 20an with regards to the operating conditions of the air conditioning apparatus 10c1, 10c2, ..., 10cn. When information regarding the operating conditions of the air conditioning apparatus 10c1, 10c2, ..., 10cn is acquired, the information is stored in the processing information storage region 33b (step S105). This is then repeated until interrogation processing for all of the management apparatus 20a1, 20a2, ..., 20an by the interrogation processors 34a1, 34a2, ... is complete (step 106). When there is no response within a fixed period of time from the management apparatus 20a1, 20a2, ..., 20an, the interrogation processors 34a1, 34a2, ... stops interrogation processing for the management apparatus 20a1, 20a2, ..., 20an, and carries out interrogation processing for the management apparatus 20a1, 20a2, ..., 20an that are subsequently allocated by the allocation unit 34b.

The group management apparatus 30 then starts to comprehend the operating conditions of the air conditioning apparatus 10c1, 10c2, ..., 10cn every air conditioning apparatus group 15b1, 15b2, ..., 15bn based on information regarding the operating conditions of the air conditioning apparatus acquired by interrogation processing for the management apparatus 20a1, 20a2, ..., 20an (step S107). The group management control unit 34 then determines whether or not there is an air conditioning apparatus 10c1, 10c2, ..., 10cn in which an abnormality is occurring amongst the air conditioning apparatus groups 15b1, 15b2, ..., 15bn (step S108). When there is even one of the air conditioning apparatus 10c1, 10c2, ..., 10cn is occurring, the group management control unit 34 displays "abnormal" at the first display 32a for the operating conditions of the air conditioning apparatus groups 15b1, 15b2, ..., 15bn that the air conditioning apparatus 10c1, 10c2, ..., 10cn belong to (step S109). When there is no air conditioning apparatus 10c1, 10c2, ..., 10cn in which an abnormality is occurring, then "normal" is displayed at the first display 32a (step S110).

The group management control unit 34 then determines whether or not there is a air conditioning apparatus 10c1, 10c2, ..., 10cn that is currently running amongst the air conditioning apparatus groups 15b1, 15b2, ..., 15bn (step S111). When there is even one of the air conditioning apparatus 10c1, 10c2, ..., 10cn is currently running, the group management control unit 34 displays "running" for the operating conditions of the air conditioning apparatus groups 15b1, 15b2, ..., 15bn (step S112). When none of the air conditioning apparatus 10c1, 10c2, ..., 10cn, are running, "stopped" is displayed at the first display 32a (step S113). The group management control unit 34 repeats step S107 to step S 113 until comprehension of the operating conditions of all of the air conditioning apparatus groups 15b1, 15b2, ..., 15bn is complete. If the comprehension of the operating conditions of all of the air conditioning apparatus groups 15b1, 15b2, ..., 15bn is complete (step S 114), the group management control unit 34 proceeds to the next step S115.

The group management control unit 34 then determines whether or not there is an "abnormal" in the operating conditions for the air conditioning apparatus groups 15b1, 15b2, ..., l5bn (step S115). When there is an abnormal occurring at even one of the air conditioning apparatus groups 15b1, 15b2, ..., 15bn, "abnormal" is then displayed at the second display (step S116). When there is no "abnormal" at any of the air conditioning apparatus groups 15b1, 15b2, ..., 15bn, "normal" is displayed at the second display unit (step S 117). The group management control unit 34 then determines whether or not there is "running" in the operating conditions for the air conditioning apparatus groups 15b1, 15b2, ..., 15bn (step S118). When there is even one of the air conditioning apparatus groups 15b1, 15b2, ..., 15bn is running, "running" is then displayed at the second display (step S119). When none of the air conditioning apparatus groups 15b1, 15b2, ..., 15bn are running, "stopped" is displayed at the second display unit (step S120).

The group management apparatus 30 executes the processing from step S107 to step S120 periodically and/or every time the management screen of the group management program is operated, and updates the operating conditions displayed at the first display 32a and the second display 32b (step S121).

When a predetermined portion of the air conditioning apparatus groups 15b1, 15b2, ..., 15bn displayed at the first display 32a is selected (step S122), the display control unit 34d of the group management apparatus 30 makes a request to the management apparatus 20a1, 20a2, ..., 20an that are connected to the air conditioning apparatus groups 15b1, 15b2, ..., 15bn for information relating to the management screen of the management program (step S123). The management apparatus 20a1, 20a2, ..., 20an receiving the information request (step S124) then send information relating to the management screen of the management program to the group management apparatus 30 (step S125). When the display control unit 34d requests to the management apparatus 20a1, 20a2, ..., 20an for information relating to the management screen of the management program, when the management program is not running at the management apparatus 20a1, 20a2, ..., 20an, the display control unit 34d causes the management programs to be started up within the management apparatus 20a1, 20a2, ..., 20an and acquires information relating to the management screen of the management programs that have been started up. The display control unit 34a then causes the management screens of the management programs to be displayed at the group management display unit 32 using the web browser (step S126).

### <Features>

(1) In the premises of this embodiment, where a plurality of buildings are dispersed and installed within one site, and where a plurality of air conditioning apparatus 10c1, 10c2, ..., 10cn are then provided at the respective buildings, it is preferable to divide the air conditioning apparatus 10c1, 10c2, ..., 10cn into a plurality of groups each constituted by air conditioning apparatus 10c1, 10c2, ..., 10cn and to manage the air conditioning apparatus 10c1, 10c2, ..., 10cn collectively per group by connecting to management apparatus 20a, 20b, ... in order to manage the air conditioning apparatus 10c1, 10c2, ..., 10cn efficiently. However, if the number of groups is increased and the number of management apparatus connecting to the groups is increased, when the group management apparatus 30 carries out interrogation processing for each of the management apparatus 20a1, 20a2, ..., 20an for the operating conditions of the air conditioning apparatus 10c1, 10c2, ..., 10cn, the differences in the timing of acquiring the information from the management apparatus 20a1, 20a2, ..., 20an may be large due to conditions of the communication. That is, when a communication error occurs in carrying out interrogation processing for any of the management apparatus 20a1, 20a2, ..., 20an, interrogation processing for the other management apparatus 20a1, 20a2, ..., 20an can not be carried out. This means that a large amount of time is required to obtain the information relating to the operating conditions of the air conditioning apparatus 10c1, 10c2, ..., 10cn from all of the management apparatus 20a1, 20a2, ..., 20an and means that there are also cases where there are the large differences between the timing of acquiring first information and the timing of acquiring last information.
   The group management apparatus 30 of this embodiment can provide an appropriate number of interrogation processors 34a1, 34a2, ..., based on predetermined states, and execute for interrogation processing for the plurality of management apparatus 20a1, 20a2, ..., 20an in parallel. The allocation unit 34b confirms states of the interrogation processing of the interrogation processors 34a1, 34a2, ... and decides which management apparatus 20a1, 20a2, ..., 20an the interrogation processors 34a1, 34a2, ... are allocated to. It is therefore possible to rapidly carry out interrogation processing for all of the management apparatus 20a1, 20a2, ..., 20an. With regard to the information relating to the operating conditions of the air conditioning apparatus 10c1, 10c2, ..., 10cn acquired at the group management apparatus 30, the differences in the timing of acquiring the information can be reduced. It is therefore possible to comprehend, at the management screen of the group management program, the operating conditions acquired in the same period of the air conditioning apparatus groups 15b1, 15b2, ..., 15bn connected at each of the management apparatus 20a1, 20a2, ..., 20an.
(2) At the group management apparatus 30 of this embodiment, it is possible to display the management screen of the management programs started up at the management apparatus 20a1, 20a2, ..., 20an at the group management display unit 32 of the group management apparatus 30 by sending control instructions from the group management apparatus 30 to the management apparatus 20a1, 20a2, ..., 20an. It is also possible to collectively stop and run the air conditioning apparatus 10c1, 10c2, ..., 10cn connected to each of the management apparatus 20a1, 20a2, ..., 20an from the group management apparatus 30 via the management apparatus 20a1, 20a2, ..., 20an.

Transmission of the control instruction described above from the group management apparatus 30 to all of the management apparatus 20a1, 20a2, ..., 20an is carried out after interrogation processing for all of the management apparatus 20a1, 20a2, ..., 20an by the interrogation processors 34a1, 34a2, ... is complete. That is, control instructions from the group management apparatus 30 to the management apparatus 20a1, 20a2, ..., 20an, such as batch stop or batch running instructions and control instructions to display the management screen of management programs can be sent only after the interrogation processors 34a1, 34a2, ... have completed the interrogation processing for all of the management apparatus 20a1, 20a2, ..., 20an. However, because the group management apparatus 30 of this embodiment does not require a long period of time for carrying out the interrogation processing for the management apparatus 20a1, 20a2, ..., 20an, other control instructions can be rapidly sent to the management apparatus 20a1, 20a2, ..., 20an.

### <Second Embodiment>

Next, a description is given of the group management system 100 of a second embodiment of the present invention. With the exception of the configuration of the group management apparatus 130, the configuration is the same as the configuration of the group management system 100 of the first embodiment. The overall configuration, the configuration of the air conditioning apparatus 10c1, 10c2, ..., 10cn, and the configuration of the management apparatus 20a1, 20a2, ..., 20an is therefore not described.

### (1) Outline of configuration for group management apparatus 130

One group management apparatus 130 is installed in the premises where the air conditioning apparatus 10c1, 10c2, ..., 10cn are provided, such as a location where a system administrator that manages the air conditioning apparatus 10c1, 10c2, ..., 10cn is on stand-by. The group management apparatus 130 is also connected to the plurality of management apparatus 20a1, 20a2, ..., 20an and acquires information relating to the operating conditions of the air conditioning apparatus 10c1, 10c2, ..., 10cn that are collectively managed by each of the management apparatus 20a1, 20a2, ..., 20an via the management apparatus 20a1, 20a2, ..., 20an. The group management apparatus 130 collectively manages the acquired operating conditions of the air conditioning apparatus 10c1, 10c2, ..., 10cn in every air conditioning apparatus group 15b1, 15b2, ..., 15bn.

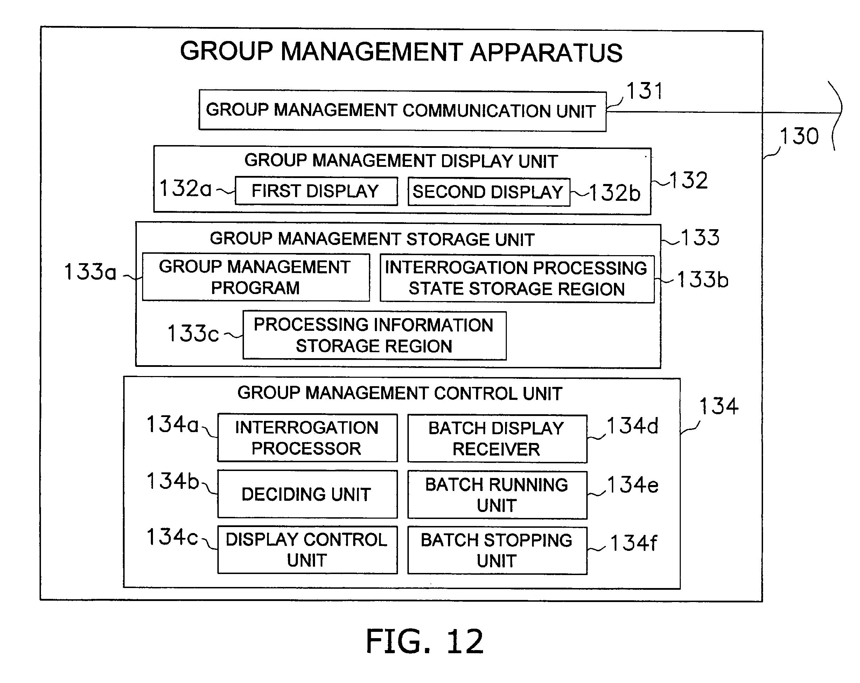

As shown in Fig. 12, the group management apparatus 130 mainly comprises a group management communication unit 131, a group management display unit 132, a group management storage unit 133, and a group management control unit 134. The group management communication unit 131 and the group management display unit 132 are the same as the group management communication unit 31 and the group management display unit 32 of the first embodiment and are therefore not described.

A region 133a for storing a group management program for collectively managing air conditioning apparatus groups 15b1, 15b2, ..., 15bn connected to the group management apparatus 130, an interrogation processing state storage region 133b, and a processing information storage region 133c are ensured at the group management storage unit 133. The interrogation processing state storage region 133b stores the state of interrogation processing by an interrogation processor 134a described later. The state of interrogation processing stored in the interrogation processing state storage region 133b is updated every time the interrogation processor 134a carries out interrogation processing for all of the management apparatus 20a1, 20a2, ..., 20an installed in the management system 100. Information relating to the operating conditions of the air conditioning apparatus 10c1, 10c2, ..., 10cn acquired from the management apparatus 20a1, 20a2, ..., 20an by the interrogation processor 134a described later is stored in the processing information storage region 133c.
The group management control unit 134 has the interrogation processor 134a, a deciding unit 134b, a display control unit 134c, a batch display receiver 134d, a batch running unit 134e, and a batch stopping unit 134f. The display control unit 134c, the batch display receiver 134d, the batch running unit 134e, and the batch stopping unit 134f are the same as the display control unit 34d, the batch display receiver 34e, the batch running unit 134f, and the batch stopping unit 34g of the first embodiment and are therefore not described.

While the group management program is executed at the group management apparatus 130, the interrogation processor 134a carries out interrogation processing for the management apparatus 20a1, 20a2, ..., 20an in order to comprehend the operating conditions of the air conditioning apparatus groups 15b1, 15b2, ..., 15bn. The interrogation processing is a process that is carried out by the interrogation processor 134a for the management apparatus 20a1, 20a2, ..., 20an to interrogate as to the operating conditions of the air conditioning apparatus 10c1, 10c2, ..., 10cn that are collectively managed by the management apparatus 20a1, 20a2, ...,20an, respectively, and is the same as the interrogation processing described in the first embodiment. Interrogation processing is carried out repeatedly by the interrogation processor 134a. In this embodiment, one-hundred and fifty management apparatus from the first management apparatus 20a1 to the management apparatus 20a150 are connected to the group management apparatus 130. The interrogation processor 134a then starts interrogation processing for the management apparatus 20a1 again upon completion of interrogation processing for the management apparatus 20a1 to the one-hundred and fiftieth management apparatus 20a150. When there is no response from the management apparatus 20a1, 20a2, ..., 20an to interrogation processing by the interrogation processor 134a before the time-out time (in this embodiment, twenty seconds) elapses, an indication that the interrogation processing was not carried out normally is displayed at the group management display unit 132.

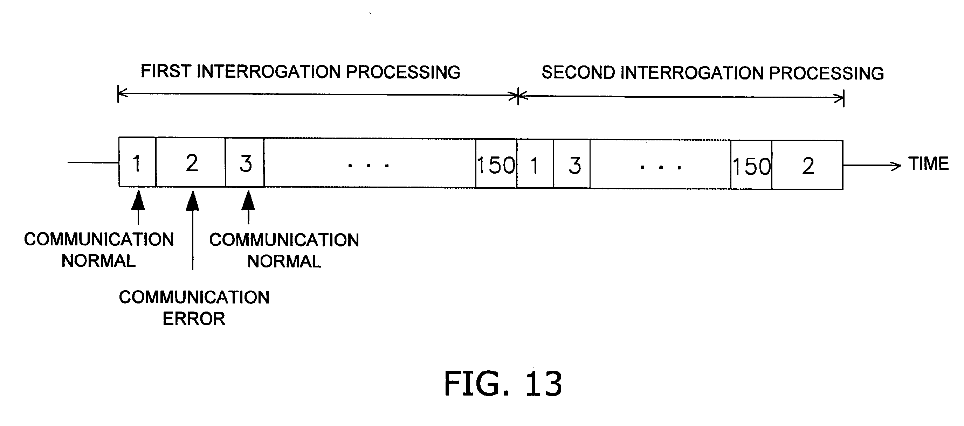

The deciding unit 134b then decides the order of the management apparatus 20a1, 20a2, ..., 20an that carry out interrogation processing based on the interrogation processing conditions stored in the interrogation processing state storage region 133b. This is described in detail using Fig. 13. For example, interrogation processing carried out in the first time is carried out by the interrogation processor 134a in order from the first management apparatus to the one-hundred and fiftieth management apparatus. At the first interrogation processing in the second time, the deciding unit 134b then decides the order of the management apparatus 20a1, 20a2, ..., 20an that to be carried out interrogation processing based on the interrogation processing state stored in the interrogation processing state storage region 133b. For example, when there is a communication error in interrogation processing of the second management apparatus 20a2 in the first time, the deciding unit 134b decides upon an order for interrogation processing in the second time where the interrogation processor 134a skips the second management apparatus 20a2, and interrogation processing goes from the first management apparatus 20a1 to the third management apparatus 20a3. The interrogation processor 134a then interrogates the second management apparatus 20a2 after finishing the interrogation processing up to the one-hundred and fiftieth management apparatus 20a150.

The group management control unit 134 makes the first display 132a and the second display 132b display whether the operating conditions of the air conditioning apparatus groups 15b1, 15b2, ..., 15bn are under predetermined states or not, based on information relating to the operating conditions of the air conditioning apparatus 10c1, 10c2, ..., 10cn stored in the processing information storage region 133c. "Predetermined states" refers to states of running (running or stop) and abnormality (normal or abnormal), as in the first embodiment. The determination of the operating conditions of the air conditioning apparatus groups 15b1, 15b2, ..., 15bn by the group management control unit 134 and the display of the determination results at the first display 132a and the second display 132b is the same as described for the first embodiment using Fig. 7 and is not described here.

Communication with the management apparatus 20a1, 20a2, ..., 20an from the group management apparatus 130 gives priority to interrogation processing of the operating conditions by the interrogation processor 134a. Namely, control signals for the management apparatus 20a1, 20a2, ..., 20an from the display control unit 134c, the batch display receiver 134d, the batch running unit 134e, and the batch stopping unit 134f are sent to the management apparatus 20a1, 20a2, ..., 20an after interrogation processing for the management apparatus 20a1, 20a2, ..., 20an by the interrogation processor 134a is complete.

### <Process flow in group management system 100>

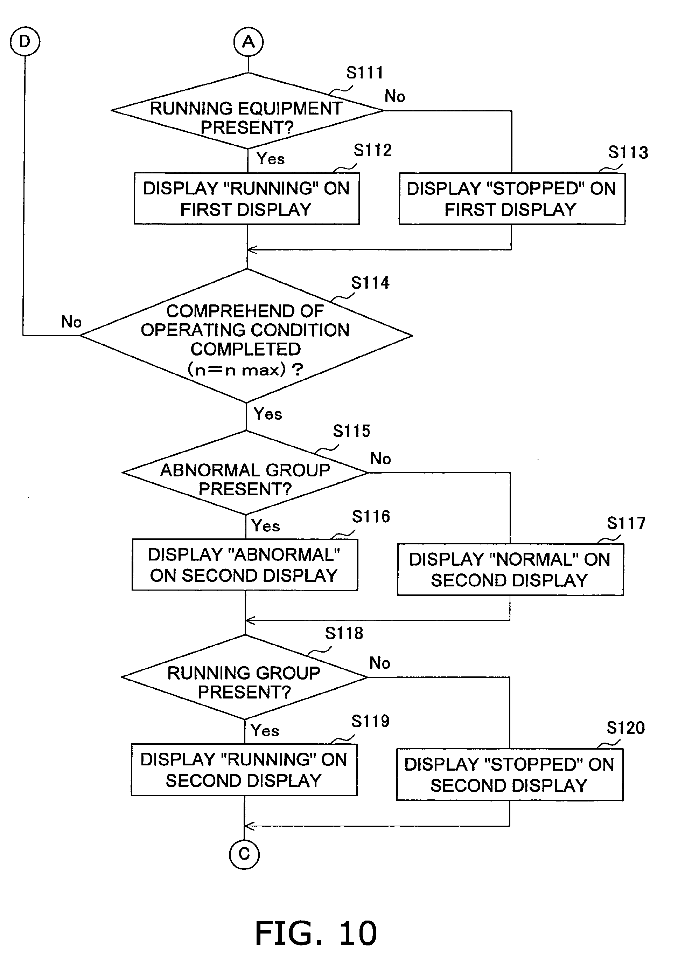

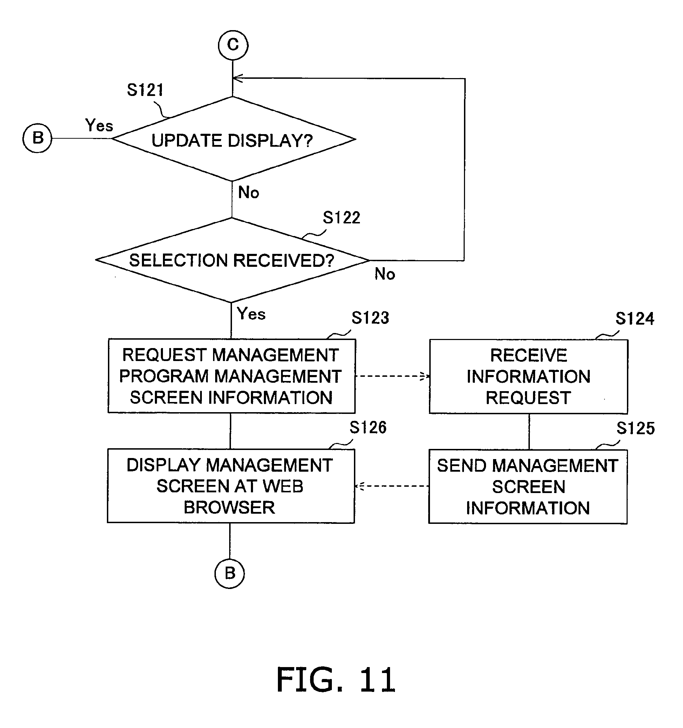

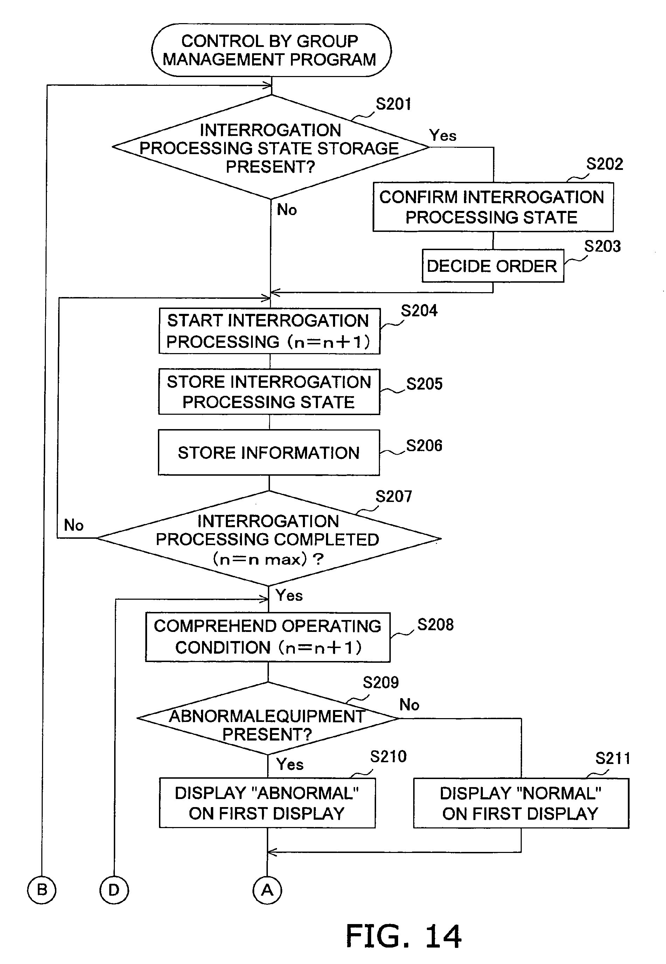

Next, a description is given with reference to Fig. 14 of the flow of control of the group management program of the group management system 100 of the second embodiment. The flow of control of the group management program of this embodiment is such that the control from step S208 onwards is the same as the control for step S107 onwards described for the flow of control for the group management program of the first embodiment. The processing from A onwards shown in Fig. 14 is also the same as the flow of control described for the first embodiment using Figs. 10 and 11. In this embodiment, the flow of control up to step S207 is described. However, a description of step S208 to step S211 in Fig. 14 and drawings and a description describing the processing from A onwards are omitted.

First, the deciding unit 134b determines whether or not the state of interrogation processing is stored in the interrogation processing state storage region 133b (step S201). When information relating to past interrogation processing states is stored in the interrogation processing state storage region 133b, the deciding unit 134b confirms this state (step S202). The interrogation processor 134a then decides the order for which the management apparatus 20a1, 20a2, ..., 20an are interrogated (step S203) based on the state. The interrogation processor 134a then starts interrogation processing for the management apparatus 20a1, 20a2, ..., 20an (step S204). The state of the interrogation processing is then stored in the interrogation processing state storage region 133b (step S205). The interrogation processor 134a then stores information relating to the operating conditions of the air conditioning apparatus 10c1, 10c2, ..., 10cn acquired from the management apparatus 20a1, 20a2, ..., 20an in the group management storage unit 133 (step S206). When there is no response within a fixed period of time from the management apparatus 20a1, 20a2, ..., 20an being interrogated, the interrogation processor 134a stops interrogation processing for the management apparatus 20a1, 20a2, ..., 20an and carries out interrogation processing for the management apparatus 20a1, 20a2, ..., 20an that are subsequently allocated is next in the order decided by the deciding unit 134b. The interrogation by the interrogation processor 134a is carried out until interrogation of all of the management apparatus 20a1, 20a2, ..., 20an connected to the group management apparatus 130 is complete (step S207).

### <Features>

(1) At the group management apparatus 130 of this embodiment, the deciding unit 134b decides the order of interrogation processing based on past interrogation processing states by the interrogation processor 134a in such a manner as to give priority to interrogation processing for management apparatus 20a1, 20a2, ..., 20an that have been carried out interrogation processing without any problems in the past. By giving priority to the interrogation processing for management apparatus20a1, 20a2, ..., 20an that have completed the interrogation processing without communication error or the like, the differences in the timing of acquiring the information relating to the operating conditions of the air conditioning apparatus 10c1, 10c2, ..., 10cn at the group management apparatus 130 can be reduced. It is therefore possible to display the operating conditions of the air conditioning apparatus groups 15b1, 15b2, ..., 15bn on the management screen of the group management program based on information acquired in the same period.
(2) At the group management apparatus 130 of this embodiment, it is possible to display the management screen for the management programs started up at the management apparatus 20a1, 20a2, ..., 20an at the group management display unit 132 of the group management apparatus 130 by sending control instructions from the group management apparatus 130 to the management apparatus 20a1, 20a2, ..., 20an. It is also possible to collectively stop and run the air conditioning apparatus 10c1, 10c2, ..., 10cn connected to each of the management apparatus 20a1, 20a2, ..., 20an from the group management apparatus 130 via the management apparatus 20a1, 20a2, ..., 20an.

### <Third Embodiment>

Next, a description is given of the group management system 100 of a third embodiment of the present invention. With the exception of the configuration of a group management apparatus 230, the configuration is the same as the configuration of the group management system 100 of the first embodiment. The overall configuration, the configuration of the air conditioning apparatus 10c1, 10c2, ..., 10cn, and the configuration of the management apparatus 20a1, 20a2, ..., 20an is therefore not described.

### (1) Outline of configuration of the group management apparatus 230

One group management apparatus 230 is installed in the premises where the air conditioning apparatus 10c1, 10c2, ..., 10cn are provided, such as a location where a system administrator that manages the air conditioning apparatus 10c1, 10c2, ..., 10cn is on stand-by. The group management apparatus 230 is also connected to the plurality of management apparatus 20a1, 20a2, ..., 20an and acquires information relating to the operating conditions of the air conditioning apparatus 10c1, 10c2, ..., 10cn that are collectively managed by each of the management apparatus 20a1, 20a2, ..., 20an via the management apparatus 20a1, 20a2, ..., 20an. The group management apparatus 230 collectively manages the acquired operating conditions of the air conditioning apparatus 10c1, 10c2, ..., 10cn in every air conditioning apparatus group 15b1, 15b2, ..., 15bn.

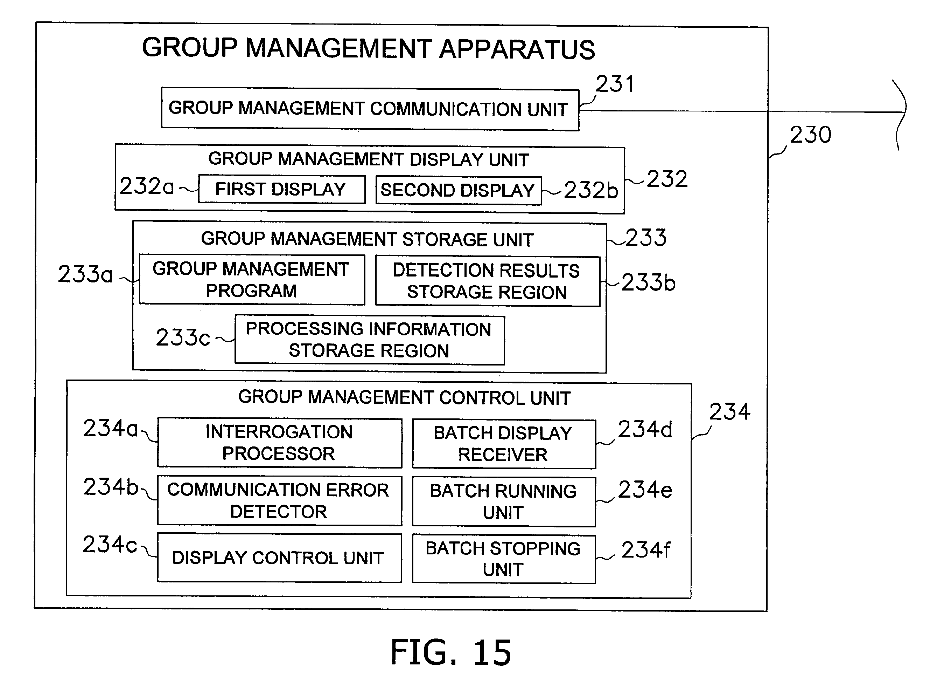

As shown in Fig. 15, the group management apparatus 230 mainly comprises a group management communication unit 231, a group management display unit 232, a group management storage unit 233, and a group management control unit 234. The group management communication unit 231 and the group management display unit 232 are the same as the group management communication unit 31 and the group management display unit 32 of the first embodiment and are therefore not described.

A region 233a for storing a group management program for collectively managing the air conditioning apparatus groups 15b1, 15b2, ..., 15bn connected to the group management apparatus 230, a detection results storage region 233b, and a processing information storage region 233c are ensured at the group management storage unit 233. The detection results storage region 233b stores results detected by a communication error detector 234b described later. Information relating to the operating conditions of the air conditioning apparatus 10c1, 10c2, ..., 10cn acquired from the management apparatus 20a1, 20a2, ..., 20an by an interrogation processor 234a described later is stored in the processing information storage region 233c.

The group management control unit 234 has the interrogation processor 234a, a communication error detector 234b, the display control unit 234c, a batch display receiver 234d, a batch running unit 234e, and a batch stopping unit 234f. The display control unit 234c, the batch display receiver 234d, the batch running unit 234e and the batch stopping unit 234f are the same as the display control unit 34d, the batch display receiver 34e, the batch running unit 34f, and the batch stopping unit 34g of the first embodiment and are therefore not described.

While the group management program is executed at the group management apparatus 230, the interrogation processor 234a carries out interrogation processing for the management apparatus 20a1, 20a2, ..., 20an in order to comprehend the operating conditions of the air conditioning apparatus groups 15b1, 15b2, ..., 15bn. The interrogation processing is a process that is carried out by the interrogation processor 234a for the management apparatus 20a1, 20a2, ..., 20an to interrogate as to the operating conditions of the air conditioning apparatus 10c1, 10c2, ..., 10cn that are collectively managed by the management apparatus 20a1, 20a2, ...,20an, respectively, and is the same as the interrogation processing described in the first embodiment. Interrogation processing is carried out repeatedly at predetermined intervals (ten minute intervals in this embodiment) by the interrogation processor 234a. In this embodiment, one-hundred and fifty units of the management apparatus 20a1 to the management apparatus 20a150 are connected to the group management apparatus 230. The interrogation processor 234a then starts interrogation processing for the management apparatus 20a1 again after completion of interrogation processing for the first management apparatus 20a1 to the one-hundred and fiftieth management apparatus 20a150. When there is no response from the management apparatus 20a1, 20a2, ..., 20an to interrogation processing by the interrogation processor 234a before the time-out time (in this embodiment, twenty seconds) elapses, an indication that the interrogation processing was not carried out normally is displayed at the group management display unit 232.

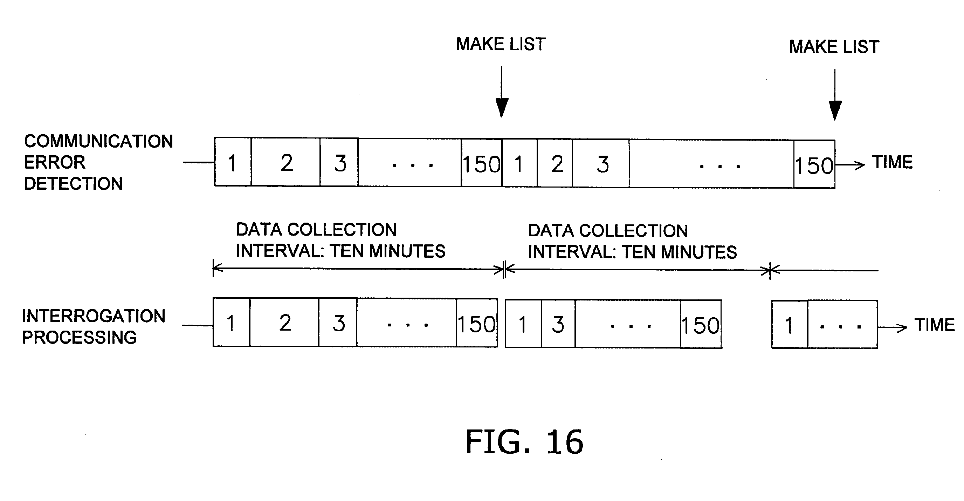

The communication error detection unit 234b detects whether or not there is errors in communication states for each management apparatus 20a1, 20a2, ..., 20an from the group management apparatus 230. The communication error detection unit 234b sends, for example, short data to confirm communication with each of the management apparatus 20a1, 20a2, ..., 20an and confirms whether or not communication errors are occurring. In this embodiment, as described above, one-hundred and fifty management apparatus from the first management apparatus 20a1 to the management apparatus 20a150 are connected to the group management apparatus 230. The communication error detection unit 234b therefore sends short data to the one-hundred and fifty management apparatus 20a1 to 20a150 and confirms the states of communication with the group management apparatus 230. As shown in Fig. 16, the communication error detection unit 234b repeatedly confirms the states of communication between the group management apparatus 230 and the management apparatus 20a1 to 20a150. The detection results are then stored in the detection results storage region 233c every time the communication error detection unit 234b confirms the communication state of each of the management apparatus 20a1 to 20a150. When the communication error detection unit 234b completes confirmation of the state of communication with the one-hundred and fifty management apparatus 20a1 to 20a150, a list indicating the management apparatus 20a1, 20a2, ..., 20an that are communicating normally is formed based on the detection results stored in the detection results storage region 233b. The interrogation processor 234a then carries out the next interrogation processing only for the management apparatus 20a1, 20a2, ..., 20an indicated in the list. When an error in communication with the management apparatus 20a1, 20a2, ..., 20an is detected by the communication error detection unit 234b or when there is an error in interrogation processing by the interrogation processor 234a, an indication of the error is displayed at the group management display unit 232.

The group management control unit 234 determines whether or not the operating conditions of the air conditioning apparatus groups 15b1, 15b2, ..., 15bn are predetermined states based on information relating to the operating conditions of the air conditioning apparatus 10c1, 10c2, ..., 10cn stored in the processing information storage region 233c, and displays the results of this determination at the first display 232a and the second display 232b. "Predetermined states" refers to states of running and abnormality, as in the first embodiment.
The determination of the operating conditions of the air conditioning apparatus groups 15b1, 15b2, ..., 15bn by the group management control unit 234 and the display of the determination results at the first display 232a and the second display 232b is the same as described for the first embodiment using Fig. 7 and is not described here.

Communication with the management apparatus 20a1, 20a2, ..., 20an from the group management apparatus 230 gives priority to interrogation processing of the operating conditions by the interrogation processor 234a. Namely, control signals for the management apparatus 20a1, 20a2, ..., 20an from the display control unit 234c, the batch display receiver 234d, the batch running unit 234e, and the batch stopping unit 234f are sent to the management apparatus 20a1, 20a2, ..., 20an after interrogation processing for the management apparatus 20a1, 20a2, ..., 20an by the interrogation processor 234a is complete. Process by the communication error detection unit 234b is carried out after the interrogation processing described the above and the transmission of the control signals.

### <Process flow in group management system 100>

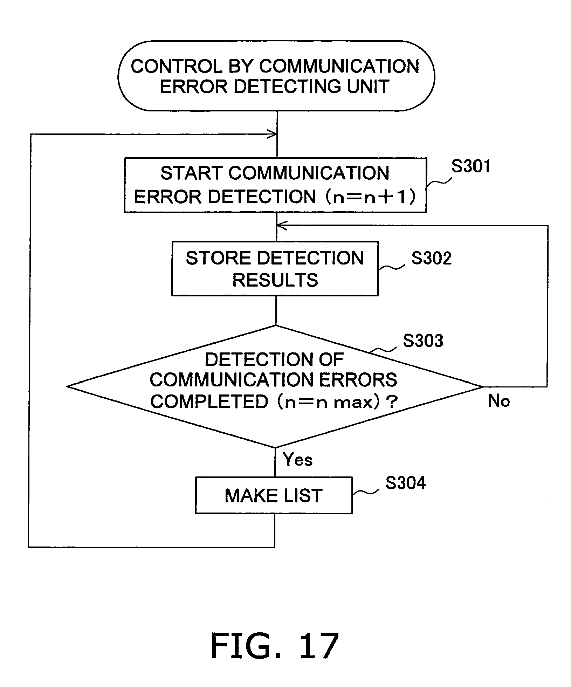

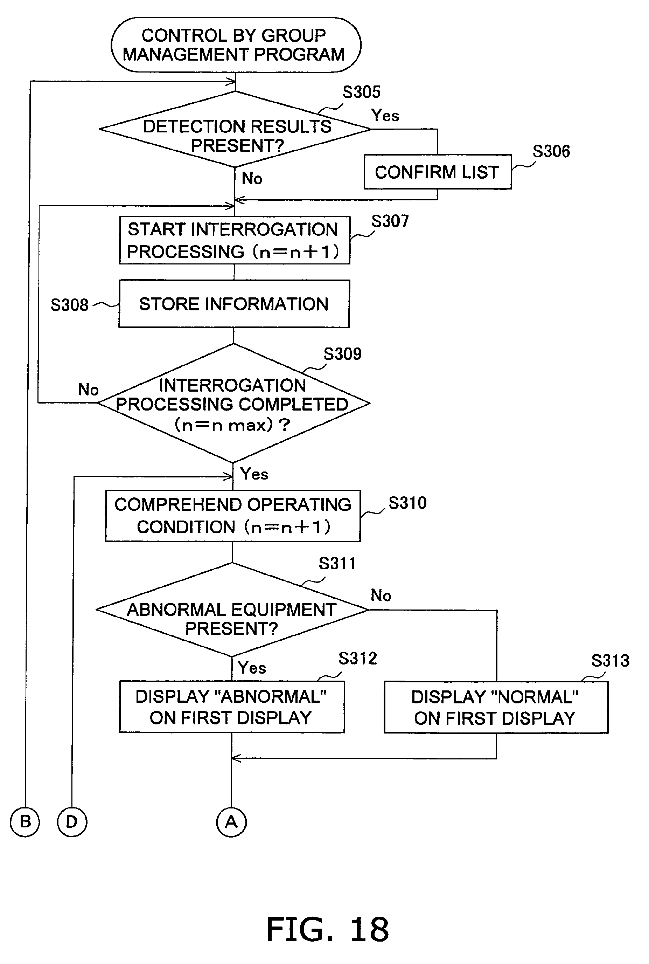

Next, a description is given with reference to Figs. 17 and 18 of the flow of control of the group management program of the group management system 100 of the third embodiment. Step S310 onwards in the flow of process by the interrogation processor 234a of this embodiment is the same as the flow of control in step S107 onwards describing the flow of the group management program of the first embodiment. The process from A onwards shown in Fig. 18 is also the same as the flow of control described for the first embodiment using Figs. 10 and 11. In this embodiment, the flow of control up to step S309 is described. However, a description of step S310 to step S313 in Fig. 18 and drawings and a description describing the processing from A onwards are omitted.

In this embodiment, confirmation of a communication state by the communication error detection unit 234b and interrogation processing of the interrogation processor 234a are carried out in parallel. First, the flow of the process of communication error detection unit 234b is described using Fig. 17. The communication error detection unit 234b confirms the communication state in order for the management apparatus 20a1, 20a2, ..., 20an connected to the group management apparatus 230 (step S301). The results of communication confirmation by the communication error detection unit 234b are then stored in the detection results storage region 233b each time the communication state is confirmed for each management apparatus 20a1, 20a2, ..., 20an (step S302). The communication error detection unit 234b then confirms the communication state for all of the management apparatus 20a1, 20a2, ..., 20an connected to the group management apparatus 230 (step S303). When the confirmation of the communication state for all of the management apparatus is complete, a list indicating management apparatus that can be communicated with without any problems is made based on the detection results stored in the detection results storage region 233b (step S304).

Next, a description is given using Fig. 18 of the flow of process by the interrogation processor 234a. Before carrying out interrogation processing for the management apparatus 20a1, 20a2, ..., 20an with regard to the operating conditions of the air conditioning apparatus 10c1, 10c2, ..., 10cn, the interrogation processor 134a confirms whether or not there is a list of the detection results indicating the management apparatus 20a1, 20a2, ..., 20an which can be communicated normally by the communication error detection unit 234b (step S305). When there is the list of the detection results, the interrogation processor 234a confirms the list (step S306) and carries out interrogation processing for the management apparatus 20a1, 20a2, ..., 20an shown in the list (step S307). When there is not the list of the detection results, all of the management apparatus 20a1, 20a2, ..., 20an are carried out interrogation processing for the operating conditions of the air conditioning apparatus 10c1, 10c2, ..., 10cn (step S307). When there is no response within a fixed period of time from the management apparatus 20a1, 20a2, ..., 20an being carried out interrogation processing, the interrogation processor 234a stops interrogation processing for the management apparatus 20a1, 20a2, ..., 20an and carries out interrogation processing for other management apparatus 20a1, 20a2, ..., 20an that are in the list of the detection results. Information acquired by interrogation processing is then stored in the group management storage unit 233 (step S308). The interrogation processing by the interrogation processor 234a is then carried out until interrogation processing for all of the management apparatus 20a1, 20a2, ..., 20an connected to the group management apparatus 130 is complete (step S309).

### <Features>

(1) At the group management apparatus 230 of this embodiment, the communication error detection unit 234b confirms communication states between the group management apparatus 230 and the management apparatus 20a1, 20a2, ..., 20an in parallel with interrogation processing of the interrogation processor 234a. The interrogation processor 234a then carries out interrogation processing, based on the detection results detected by the communication error detection unit 234b, for the management apparatus 20a1, 20a2, ..., 20an that have been carried out interrogation processing without any problems in the past. Because the detection of communication errors and the interrogation processing are carried out in parallel, the interrogation processor 234a can carry out interrogation processing for the management apparatus 20a1, 20a2, ..., 20an based on the detection results in the communication error detection unit 234b. This means that delays in information acquisition due to communication errors less influence on information relating to the operating conditions of the air conditioning apparatus 10c1, 10c2, ..., 10cn acquired at the group management apparatus 230, and the differences in timing of acquiring information is reduced. The operating conditions of the air conditioning apparatus groups 15b1, 15b2, ..., 15bn can then be displayed at the management screen of the group management program based on information acquired in the same period.

### <Modified Example>

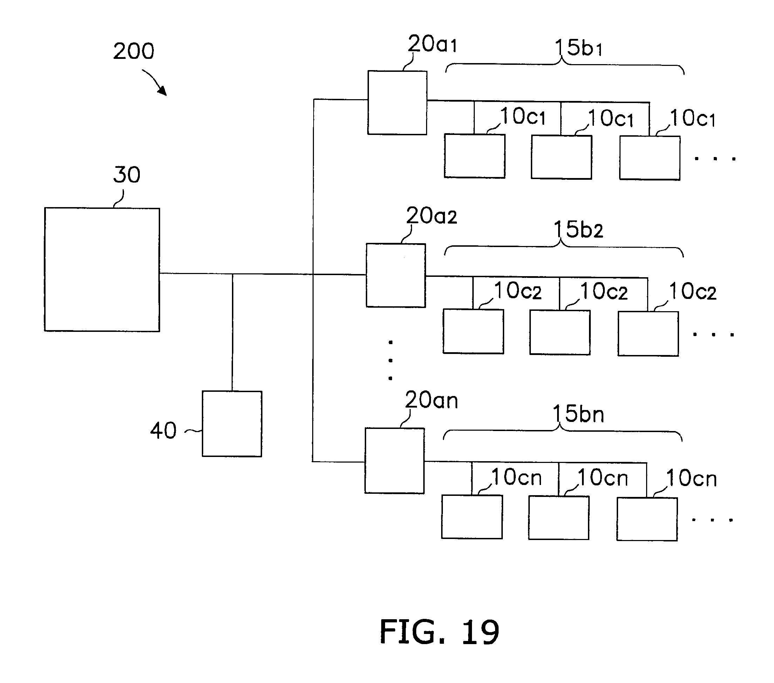

(1) In the first to third embodiments, the air conditioning apparatus 10c1, 10c2, ..., 10cn hat are management targets are not limited to being configured by the same type of air conditioning apparatus 10c1, 10c2, ..., 10cn and may also be configured by plural types of air conditioning apparatus 10c1, 10c2, ..., 10cn.
   The installation equipment can also be installation equipment other than the air conditioning apparatus 10c1, 10r2, ..., 10cn. For example, the installation equipment may be electrical equipment, water supply and drainage apparatus, a humidifier, an elevator, lighting apparatus, disaster prevention apparatus, or crime prevention devices etc., or may be a combination of a number of types of equipment.
(2) In the first to third embodiments, the management apparatus 20a1, 20a2, ..., 20an and the group management apparatus 30 may be connected by a line other than an intranet line. For example, they may be interconnected by a dedicated control line, an Internet line or a telephone line.
(3) In the flow of control of the group management program described in the first embodiment, determination of the operating conditions of the air conditioning apparatus groups 15b1, 15b2, ..., 15bn and determination of the operating conditions of the entire system is carried out in order of whether of not an abnormality has occurred and whether or not the air conditioning apparatus are currently running. However, determination of the operating conditions is not limited to this order. The determination whether or not an abnormality has occurred may also be carried out after the determination whether or not the air conditioning apparatus are currently running has been carried out.
(4) The group management apparatus 30 of the first embodiment may further ensure an interrogation processing state storage region that stores the states of interrogation processing by the interrogation processors 34a1, 34a2, .. , and the allocation unit 34b may further allocate the interrogation processors 34a1, 34a2, ... to interrogation processing for each of the management apparatus 20a1, 20a2, ..., 20an based on the interrogation processing state stored in the interrogation processing state storage region. The state of interrogation processing stored in the interrogation processing state storage region is updated every time the interrogation processors 34a1, 34a2, ... carry out interrogation processing for all of the management apparatus 20a1, 20a2, ..., 20an installed in the management system 100. Because the state of the previous interrogation processing can be comprehended based on the interrogation processing state in the interrogation processing state storage region, the allocation unit 34b may allocate the interrogation processors 34a1, 34a2, ... to give priority to management apparatus 20a1, 20a2, ..., 20an that can be communicated without any problems in the previous interrogation processing. In this case, the allocation unit 34b is allocated to interrogation processing for the management apparatus 20a1, 20a2, ..., 20an that communication errors occurred in the previous interrogation processing after interrogation processing for all of the management apparatus 20a1, 20a2, ..., 20an that communication can be carried out without any problems is complete. Therefore, information relating to the operating conditions of the air conditioning apparatus 10c1, 10c2, ..., 10cn obtained by the group management apparatus 30 is not susceptible to the influence of communication errors. It is therefore possible to confirm the operating conditions based on information obtained at the same time at the management screen of the group management apparatus.
(5) At the group management apparatus 230 of the third embodiment, process of the communication error detection unit 234b in the first time can be combined with interrogation processing by the interrogation processor 234a. This is to say that the results of communication error detected through interrogation processing for the management apparatus 20a1, 20a2, ..., 20an by the interrogation processor 234a may store in the detection results storage region 233b, and the interrogation processor 234a may carry out following interrogation processing based on the detected results stored in the detection results storage region 233b.
(6) At the management system 100 in the first to third embodiments, operation of each management apparatus 20a1, 20a2, ..., 20an can be carried out at the group management apparatus 30, 130, 230, and the air conditioning apparatus 10c1, 10c2, ..., 10cn managed by the management apparatus 20a1, 20a2, ..., 20an are managed there. However, it might be configured that operation of each of the management apparatus 20a1, 20a2, ..., 20an may be carried out at locations other than the group management apparatus 30, 130, 230. For example, other apparatus (web client) 40 (corresponding to the concerned parties management apparatus) may be configured to connect to an intranet line or Internet line connecting the management apparatus 20a1, 20a2, ..., 20an and the group management apparatus 30, 130, 230 and to operate the management apparatus 20a1, 20a2, ..., 20an from the web client 40 (refer to Fig. 19).

The web client 40 is a typical personal computer that the parties concerned for the air conditioning apparatus 10c1, 10c2, ..., 10cn operates. The parties concerned for the air conditioning apparatus 10c1, 10c2, ..., 10cn is the administrator of the air conditioning apparatus 10c1, 10c2, ..., 10cn including the system administrator managing the air conditioning apparatus 10c1, 10c2, ..., 10cn at the location where the group management apparatus 30 is installed. Further, as mentioned the above, the web client 40 is connected to an intranet line or an Internet line connecting the management apparatus 20a1, 20a2, ..., 20an and the group management apparatus 30, 130, 230. Communication carried out between the web client 40 and the management apparatus and between the web client 40 and the group management apparatus 30, 130, 230 are carried out by using the same communication protocol (for example, http communication).

In the following, examples are shown of a configuration of a management system 200 (refer to Fig. 19) where the web client 40 is provided at a system constituted by the group management apparatus 30, the management apparatus 20a1, 20a2, ..., 20an, and the air conditioning apparatus 10c1, 10c2, ..., 10cn. However, the same also applies for the case of using the group management apparatus 130, 230 in place of the group management apparatus 30. With regard to the configuration of the group management apparatus 30, 130, 230 and the management apparatus 20a1, 20a2, ..., 20an, the configuration that added to the above embodiments are only described.

### <Example 1>

Each management apparatus 20a1, 20a2, ..., 20an is provided with a web server function. Programs such as JAVA applets for executing the management programs are also stored in each of the management apparatus 20a1, 20a2, ..., 20an. The web client 40 downloads programs such as JAVA applets from each management apparatus 20a1, 20a2, ..., 20an.

This means that not only can the operation of each of the management apparatus 20a1, 20a2, ..., 20an be managed at the group management apparatus 30, but also each of the management apparatus 20a1, 20a2, ..., 20an can be managed at the web client 40, and the operation of the air conditioning apparatus 10c1, 10c2, ..., 10cn managed at each of the management apparatus 20a1, 20a2, ..., 20an can be managed. Therefore, even if the group management apparatus 30 is broken due to failure etc., for example, it is possible to manage the air conditioning apparatus 10c1, 10c2, ..., 10cn without directly going to the management apparatus 20a1, 20a2, ..., 20an.

### <Example 2>

Group management apparatus 30 is provided with a web server function. Further, programs such as JAVA applets for executing the management program of each management apparatus 20a1, 20a2, ..., 20an at the group management apparatus 30, the programs being appended layout information, are stored. "Layout information" is information indicating the layout of rooms or buildings each of the air conditioning apparatus 10c1, 10c2, ..., 10cn are installed in such as, for example, the layout shown in Fig. 4. The web client 40 downloads programs such as JAVA applets appended with layout information from the group management apparatus 30.

It is then possible, at the web client 40, to operate each of the management apparatus 20a1, 20a2, ..., 20an and to manage each of the air conditioning apparatus 10c1, 10c2, ..., 10cn managed by each of the management apparatus 20a1, 20a2, ..., 20an, using the programs such as the JAVA applets and the layout information downloaded from the group management apparatus 30.

### <Example 3>

Each management apparatus 20a1, 20a2, ..., 20an and the group management apparatus 30 are provided with a web server function. Programs such as JAVA applets for executing the management programs of each of the management apparatus 20a1, 20a2, ..., 20an are stored at each management apparatus 20a1, 20a2, ..., 20an. The layout information for the management apparatus 20a1, 20a2, ..., 20an is stored at the group management apparatus 30. The web client 40 downloads programs such as JAVA applets from each management apparatus 20a1, 20a2, ..., 20an and downloads layout information from the group management apparatus 30.

It is then possible, at the web client 40, to operate each of the management apparatus 20a1, 20a2, ..., 20an, using the layout information downloaded from the group management apparatus 30 and to manage each of the air conditioning apparatus 10c1, 10c2, ..., 10cn managed by each of the management apparatus 20a1, 20a2, ..., 20an.

### <Example 4>

Each management apparatus 20a1, 20a2, ..., 20an and the group management apparatus 30 are provided with a web server function. Programs such as JAVA applets for executing the management programs of each of the management apparatus 20a1, 20a2, ..., 20an are stored at each management apparatus 20a1, 20a2, ..., 20an. Programs such as JAVA applets for executing the group management programs are also stored at the group management apparatus 30. The web client 40 downloads programs such as stored JAVA applets from each management apparatus 20a1, 20a2, ..., 20an and from the group management apparatus 30.

As a result, at the web client 40, it is possible to individually manage the air conditioning apparatus 10c1, 10c2, ..., 10cn managed by each of the management apparatus 20a1, 20a2, ..., 20an and it is possible to comprehensively manage the air conditioning apparatus groups 15b1, 15b2, ..., 15bn managed by the group management apparatus 30.

By adopting the configurations described above in examples 1 to 4, it is possible, from a web client 40 that is a typical personal computer, to comprehensively manage the air conditioning apparatus groups 15b1, 15b2, ..., 15bn by the group management apparatus 30, 130, 230 and/or carry out management of the air conditioning apparatus 10c1, 10c2, ..., 10cn carried out by the management apparatus 20a1, 20a2, ..., 20an. That is, it is possible to operate the air conditioning apparatus 10c1, 10c2, ..., 10cn and/or the air conditioning apparatus groups 15b1, 15b2, ..., 15bn and view the operating conditions of the air conditioning apparatus 10c1, 10c2, ..., 10cn and/or the air conditioning apparatus groups 15b1, 15b2, ..., 15bn at locations other than the group management apparatus 30, 130, and 230.

### <Further Embodiments>

In the above, a description is given based on the drawings of the embodiments of the present invention. However, the specific configuration is by no means limited to these embodiments and various modifications are possible without deviating from the essence of the present invention.

### INDUSTRIAL APPLICABILITY

The present invention enables collective management of a plurality of air conditioning apparatus groups connected to a plurality of management apparatus and a plurality of air conditioning apparatus belonging to the air conditioning apparatus group. This is particularly useful as group management apparatus and group management programs that enable the time differences for acquiring information small, the information of which is about the operating conditions of installation equipment acquired from the plurality of management apparatus.

## Claims

1. A group management apparatus (30) connected to first to nth management apparatus (20al to 20an) that collectively manage a plurality of installation equipment (10c1 to 10cn) belonging to first to nth installation equipment groups (15b1 to 15bn) and configured to collectively manage the first to nth installation equipment groups, said group management apparatus comprising:
a plurality of interrogation processors (34a1, 34an, ...) that repeatedly carry out interrogation processing for the first to nth management apparatus regarding operating conditions of the installation equipment collectively managed by the first to nth management apparatus; and
an allocation unit (34b) that allocates different interrogation processors to the first to nth management apparatus, respectively, one at a time,
wherein the allocation unit allocates other allocation processors to the first to nth management apparatus according to an interrogation processing state of the installation equipment by at least one of the interrogation processors.

2. The group management apparatus according to claim 1, further comprising an operation unit (34c) that decides the number of the interrogation processors based on predetermined states.

3. The group management apparatus according to claim 2, further comprising a storage unit (33) that stores an operating and viewing program capable of operating the installation equipment and/or viewing an operating condition of the installation equipment, the operating and viewing program being capable of being executed at a party concerned management apparatus (40) in the possession of a party concerned of the installation equipment.

4. A group management apparatus connected to first to nth management apparatus (20a1 to 20an) that collectively manage a plurality of installation equipment (10c1 to 10cn) belonging to first to nth installation equipment groups (15b1 to 15bn) and configured to collectively manage the first to nth installation equipment groups, said group management apparatus comprising:
an interrogation processor (134a) that repeatedly carries out interrogation processing for the first to nth management apparatus regarding operating conditions of the installation equipment collectively managed by the first to nth management apparatus; and
a deciding unit (134b) that decides an order of the interrogation processing for the first to nth management apparatus by the interrogation processor,
wherein the deciding unit decides the order of the interrogation processing for the first to nth management apparatus based on past interrogation processing states by the interrogation processor, and
the interrogation processor carries out the interrogation processing for the first to nth management apparatus based on the order decided by the deciding unit.

5. The group management apparatus according to claim 4, wherein the order of the interrogation processing decided by the deciding unit gives priority to interrogation processing for the first to nth management apparatus carried out the interrogation processing without any problem in the past.

6. The group management apparatus according to claim 4, further comprising a storage unit (133) that stores an operating and viewing program capable of operating the installation equipment and/or viewing an operating condition of the installation equipment, the operating and viewing program being capable of being executed at an administrator management apparatus (40) in the possession of an administrator of the installation equipment.

7. A group management apparatus connected to first to nth management apparatus (20a1 to 20an) that collectively manage a plurality of installation equipment (10c1 to 10cn) belonging to first to nth installation equipment groups (15b1 to 15bn) and configured to collectively manage the first to nth installation equipment groups, said group management apparatus comprising:
an interrogation processor (234a) that repeatedly carries out interrogation processing for the first to nth management apparatus regarding operating conditions of the installation equipment collectively managed by the first to nth management apparatus;
a communication error detector (234b) that detects whether or not there is errors in communication states for the first to nth management apparatus; and
a storage unit (233) that stores detection results of the communication error detector,
wherein the interrogation processor carries out interrogation processing for the first to nth management apparatus based on the detection results stored in the storage unit during the interrogation processing of the operating conditions.

8. The group management apparatus according to claim 7, wherein the interrogation processor carries out the interrogation processing for only management apparatus of the first to nth management apparatus that have not shown errors in communication states in the past based on the detection results stored in the storage unit during the interrogation processing of operating conditions.

9. The group management apparatus according to claim 7, wherein the storage unit stores an operating and viewing program capable of operating the installation equipment and/or viewing an operating condition of the installation equipment; and
the operating and viewing program being capable of being executed at a party concerned management apparatus (40) in the possession of a party concerned of the installation equipment.

10. A program executed at group management apparatus connected to first to nth management apparatus that collectively manage a plurality of installation equipment belonging to first to nth installation equipment groups and collectively managing the first to nth installation equipment groups, said program comprising steps of:
setting a plurality of interrogation processors, at the group management apparatus, that repeatedly carry out interrogation processing for the first to nth management apparatus regarding operating conditions of the installation equipment collectively managed by the first to nth management apparatus;
allocating different interrogation processors to the first to nth management apparatus, respectively, one at a time; and
carrying out the interrogation processing for first to nth management apparatus by the interrogation processors allocated in the allocation step,
wherein the allocation step allocates other interrogation processors to the first to nth management apparatus according to a state of the interrogation processing of at least one of the interrogation processors in the carrying out step.

11. A program executed at group management apparatus connected to first to nth management apparatus that collectively manage a plurality of installation equipment belonging to first to nth installation equipment groups and collectively managing the first to nth installation equipment groups, said program comprising steps of:
setting an interrogation processor that repeatedly carries out interrogation processing for the first to nth management apparatus regarding operating conditions of the installation equipment collectively managed by the first to nth management apparatus;
deciding an order of the interrogation processing for the first to nth management apparatus by the interrogation processor; and
carrying out the interrogation processing for the first to nth management apparatus,
wherein the deciding step decides the order of the interrogation processing of the first to nth management apparatus based on past interrogation processing states, and the carrying out step carries out the interrogation processing for the first to nth management apparatus based on the order decided in the deciding step.

12. A program executed at group management apparatus connected to first to nth management apparatus that collectively manage a plurality of installation equipment belonging to first to nth installation equipment groups and collectively managing the first to nth installation equipment groups, said program comprising steps of:
setting an interrogation processor that repeatedly carries out interrogation processing for the first to nth management apparatus regarding operating conditions of the installation equipment collectively managed by the first to nth management apparatus;
carrying out the interrogation processing for the first to nth management apparatus,
detecting whether or not there is errors in communication states for the first to nth management apparatus; and
storing results detected for the communication states detected in the communication error detection step,
wherein the carrying out step is executed in parallel with the communication error detection step, and
the carrying out step carries out the interrogation processing for the first to nth management apparatus based on the detection results stored in the storage step during the interrogation processing.
